# EUROPÄISCHE PATENTSCHRIFT

(11) **EP 3 932 534 B1**
(45) Veröffentlichungstag und Bekanntmachung des Hinweises auf die Patenterteilung: **07.12.2022**
(21) Anmeldenummer: 20183142.7
(22) Anmeldetag: 30.06.2020
(51) Int. Cl.: B01J 8/12, B01J 8/18, B01J 8/24

(54) **VERFAHREN UND VORRICHTUNG ZUM RECYCLING VON WERTMETALLHALTIGEN ABFALLSTOFFEN**
METHOD AND DEVICE FOR RECYCLING WASTE CONTAINING VALUABLE METALS
PROCÉDÉ ET DISPOSITIF DE RECYCLAGE DES DÉCHETS CONTENANT DES MÉTAUX NOBLES

(43) Veröffentlichungstag der Anmeldung: 05.01.2022
(73) Patentinhaber: AURA Technologie GmbH, 06311 Helbra (DE)
(72) Erfinder: GÖRLITZ, Frank, 14532 Kleinmachnow (DE); WESTPHAL, Sebastian, 06120 Halle (Saale) (DE)
(74) Vertreter: Maikowski & Ninnemann Patentanwälte Partnerschaft mbB

(56) Entgegenhaltungen:
- DE-A1-102008 058 501
- DE-A1-102013 222 969
- DE-A1-102016 105 574

## Beschreibung

### Gebiet der Erfindung

Die Erfindung betrifft Verfahren zum Recycling von wertmetallhaltigen Abfallstoffen in einem Wirbelschichtofen, umfassend die Phasen I) Anfahren des Wirbelschichtofens; und II) Kontinuierliche Behandlung der wertmetallhaltigen Abfallstoffe, dadurch gekennzeichnet, dass der Wirbelschichtofen während der Phase II der kontinuierlichen Behandlung der wertmetallhaltigen Abfallstoffe autotherm betrieben wird, wobei die Prozesstemperatur über den Füllstand des Wirbelschichtofens und die Materialdurchflussrate geregelt wird, wobei das Verfahren wie in Anspruch 1 beschrieben, ausgestaltet ist. Die Erfindung stellt weiterhin eine Vorrichtung umfassend einen Wirbelschichtofen zum Recycling von wertmetallhaltigen Abfallstoffen in einem kontinuierlichen autothermen Verfahren bereit. Die wertmetallhaltigen Abfallstoffe stammen beispielsweise aus Erdölraffinerien und der chemischen Industrie.

### Hintergrund der Erfindung

Die Erfindung steht beispielsweise im Zusammenhang mit der Erdölverarbeitung und - veredelung. Das aus den Lagerstätten gewonnene Rohöl wird vor Ort für den Transport zur Raffinerie aufbereitet, d. h., im Wesentlichen grob von Sedimenten und Wasser getrennt. Nach diesen ersten Verarbeitungsschritten wird es als Erdöl zu den Raffinerien geliefert. Hier wird das Flüssigkeitsgemisch in weiteren komplizierten und aufeinanderfolgenden Einzelschritten in unterschiedliche Fraktionen getrennt und zu verkaufsfähigen Produkten aufbereitet. Die Technik ist heute so weit fortgeschritten, dass keinerlei Stoffe des Rohöls unverwendet bleiben. Selbst das überall, aber unerwünscht als Nebenprodukt anfallende Raffineriegas, findet Verwendung. Es wird entweder direkt in den Prozessöfen als Energieträger benutzt oder in der chemischen Weiterverarbeitung als Synthesegas eingesetzt. Die Erdölaufarbeitung umfasst u.a. die Erdölreinigung und Entsalzung, die sogenannte Primärverarbeitung und die Sekundärverarbeitung, wobei das Erdöl mittels Destillation in Bestandteile wie Leichtbenzin (Naphtha), darunter Kerosin, Dieselkraftstoff und leichtes Heizöl getrennt wird. Der dabei entstehende Rückstand wird erneut destilliert, um ihn in weitere Produkte aufzutrennen.

Nach der Sekundärverarbeitung wird eine Reihe von Veredlungsverfahren angewendet, um die Qualität der Zwischenprodukte zu verbessern. Fast alle Mineralölprodukte, die die Raffinerie verlassen, sind nicht nur einfach aus Erdöl destilliert/rektifiziert. So werden Vergaserkraftstoffe, Dieselkraftstoff, Heizöl (extraleicht) für Immobilien und Heizöl für Industrieanlagen (Heizöl schwer) aus verschiedenen Zwischenprodukten / Komponenten zusammengemischt, die bei den nachfolgend genannten Herstellungsprozessen erzeugt werden. In dem sogenannten Hydrotreating und dem Claus-Verfahren wird eine Entschwefelung der bei der fraktionierten Destillation anfallenden Schmier- und Heizöle vorgenommen. Da diese Produkte reich an Schwefelverbindungen sind, würden diese bei der Verbrennung giftiges Schwefeldioxid freisetzen. Beim Hydrotreating werden die zu entschwefelnden Öle mit Wasserstoff vermischt und erhitzt. Das heiße Gemisch gelangt in einen mit einem Katalysator gefüllten Reaktor. Bei einer Temperatur von ca. 350 °C reagiert der Wasserstoff mit den Schwefelverbindungen zu Schwefelwasserstoff. Beim nachfolgenden Claus-Verfahren wird der angefallene Schwefelwasserstoff mit Luftsauerstoff in einem Reaktor verbrannt. Es lässt sich dabei Schwefel gewinnen. Eingesetzt werden dabei Katalysatoren, die Wertmetalle enthalten, wie Nickel, Molybdän, Wolfram oder Kobalt auf Aluminiumoxid. Ähnliche wertmetallhaltige Katalysatoren werden beim Hydrocracking und in Platformer-Einheiten verwendet.

Katalysatoren werden auch beim Reforming eingesetzt. Das katalytische Reforming hat zum Ziel, die Oktanzahl des Rohbenzins (Siedebereich 75-180 °C) zu erhöhen und aromatische Kohlenwasserstoffe zu erzeugen. Weiterhin erhält man Wasserstoff als Produkt, der in den Hydrotreating-Prozessen und in Hydrocracking-Prozessen eingesetzt wird. Das Reforming läuft bei ca. 500°C und 5-40 bar in einem Wanderbettreaktor ab. Eingesetzt werden dabei bifunktionelle Katalysatoren (Platin-Zinn oder Platin-Rhenium, auf chloriertem Aluminiumoxid oder Zeolithen). An den Metallzentren des Katalysators laufen dabei bevorzugt die Hydrierungs-/Dehydrierungsreaktionen ab, während die Säurezentren Isomerisierungs- und Ringschlussreaktionen katalysieren. Eine unerwünschte Nebenreaktion ist die Verkokung des Katalysators durch Polymerisations- und Dehydrierungsreaktionen. Die Verkokung wird durch Abbrennen des Kokses und anschließender Oxychlorierung des Katalysators entfernt.

Die Lebensdauer von Katalysatoren ist begrenzt. Sie verlieren ihre Wirksamkeit je nach Prozess in einem Zeitraum von einigen Sekunden bis zu mehreren Jahren. Häufig tritt neben dem Verlust an Aktivität auch eine Verschlechterung der Selektivität auf. Nach Abfallen des Katalysatorwirkungsgrades unter einen gewünschten Grenzwert müssen die Katalysatoren deshalb aus den Erdölraffinerieprozessen entfernt und durch neue Katalysatoren ersetzt werden. Eine Regeneration der aus den Erdölraffinerieprozessen stammenden Katalysatorchargen mit dem Ziel der Wiederverwendung ist derzeit jedoch nicht unbegrenzt möglich. Die aus den Erdölraffinerieprozessen stammenden Katalysatorchargen stellen deshalb Abfallpodukte dar, die Aufgrund des hohen Gehaltes an Schwefel und Ölbestandteilen als Sondermüll einzustufen sind. Um hohe Kosten für die Entsorgung und Lagerung als Sondermüll zu vermeiden, stellt die vorliegende Erfindung ein Verfahren und eine Vorrichtung bereit, mit deren Hilfe wertmetallhaltige Abfallstoffe, wie die aus den Erdölraffinerieprozessen stammenden Katalysatorchargen, aufgearbeitet werden können, d.h. schädliche Schwefel und Ölbestandteile effektiv entfernt werden können. Die wiederaufgearbeiteten Katalysatorchargen weisen hohe Gehalte an Nickel, Wolfram, Molybdän oder Cobalt sowie Aluminiumoxid auf und stellen begehrte Rohstoffe in der Stahlindustrie dar. Wertmetallhaltige Abfallstoffe fallen, neben Erdölraffinerien, auch in andern Bereichen der Industrie an, in denen wertmetallhaltige Stoffe mit organischen Stoffen verunreinigt werden. Die Erfindung leistet damit einen wesentlichen Beitrag zur Reduzierung des CO₂ - Fußabdrucks dieser Industriezweige und schließt, als Teil der Kreislaufwirtschaft, den Materialkreislauf für die genannten Wertmetalle.

Die vorliegende Erfindung basiert auf einem Wirbelschichtofen, der nach dem Anfahrprozess autotherm betrieben wird und in dem in einem kontinuierlichen Verfahren das Recycling der wertmetallhaltigen Abfallstoffe, wie beispielsweise von aus Erdölraffinerieprozessen stammenden Katalysatorchargen, erfolgt.

Verfahren zur Wiederaufbereitung von Katalysatoren aus Erdölraffinerien sind beispielsweise aus der CN104415797 A und der CN104549564A bekannt. Die Wiederaufbereitung erfolgt hier jedoch unter Verwendung von zusätzlich in die Wirbelschichtöfen eingebrachten Regenerierungsmitteln ("regeneration agent"). In dem in der EP0710502 B1 beschriebenen Verfahren werden relativ niedrige Prozesstemperaturen (300°C-680°C) verwendet und es werden halogenhaltige Substanzen in den Wirbelschichtofen eingebracht. Der in der DE4041976 A1 beschriebene Prozess findet bei Überdruck (0,1-0,5MPa) anstelle von Unterdruck statt. D.h. es besteht die Gefahr des Austritts schädlicher Gase aus dem Reaktor. Die EP0332536 B1 offenbart einen Ofen mit zwei Kammern, die jeweils unterschiedliche Temperaturen (T1<730°C, T2<950°C) aufweisen.

Autotherme Schaltungen von Wirbelschichtöfen werden im Stand der Technik lediglich ohne Bezug zur Erdölverarbeitung bzw. zur Katalysatoraufarbeitung aus Erdölraffinerien beschrieben. So beschreibt die DE19953233 A1 ein Verfahren, in dem eine energetische Kopplung eines exothermen und eines endothermen Prozesses erfolgt, wobei beide Prozesse simultan ablaufen. Die US20020034458 A1 offenbart ein Verfahren zur Gewinnung von reinem Wasserstoff, wofür eine Dampf/Methan-Reformierungsreaktion und eine Sauerstoff/Methan-Oxygenierung unter autothermen Bedingungen genutzt werden. Im Prozess werden gasförmige Kohlenwasserstoffe und Dampf zugeführt. Ein Katalysator dient dem internen Wärmetransport. Die GB1060141 A beschreibt das Cracken von flüssigen Kohlenwasserstoffen zu Stadtgas, Netzgas oder Gasen mit höherem Heizwert bei relativ niedrigen Prozesstemperaturen (400°C-600°C) und unter Zugabe von Dampf. Die US3745940 A offenbart allgemein einen Wirbelschichtofen mit vier verschiedenen Zonen. Die US4291635 A betrifft Verfahren und eine Vorrichtung zur kontinuierlichen autogenen Verbrennung von leicht zerreibbaren brennbaren Agglomeraten von Abfallstoffen mit hohem Feuchtigkeitsgehalt im Bereich von ca. 50 bis 75% in einem Wirbelbett.

Herkömmlich erfolgt die Wiederaufbereitung von Katalysatorchargen aus der Erdölveredelung in einem zweistufigen Wirbelschichtofen, wobei das wiederaufzubereitende Material von oben eingetragen wird. Ein oder mehrere Brenner sind in der Regel seitlich angeordnet. Die Materialbewegung erfolgt über Strömungsblätter des Wirbelschichtofens und die Verbrennungsluft. Die herkömmlichen Wiederaufbereitungsverfahren sind sehr energieaufwendig, da die Brenner 24 Stunden am Tag aktiv sein müssen. Die herkömmlichen Wiederaufbereitungsverfahren sind zudem auch ineffizient, da die Materialzuflussrate reduziert werden muss, wenn die Temperatur in den Wirbelschichtofen über eine Solltemperatur hinaus ansteigt. Zudem wird bei herkömmlichen Wirbelschichtöfen im Bereich der Wiederaufbereitung von Katalysatoren aus Erdölraffinerien die Abwärme ungenutzt über den Schornstein abgegeben. Weiteren Stand der Technik auf diesem Gebiet zeigt Dokument DE 10 2016 105574.

### Beschreibung der Erfindung

Die erfindungsgemäß aufzuarbeitenden wertmetallhaltigen Abfallstoffe weisen die Besonderheit auf, dass sie Schwefelverunreinigungen sowie brennbare Öl- und Koksreste aufweisen. Die Aufgabe der Erfindung bestand darin, ein einfaches, energetisch kostengünstiges Wiederaufbereitungsverfahren bereitzustellen, bei dem gleichzeitig der Austritt schädlicher Gase unterbunden wird, d.h. es soll ein energieeffizientes, umweltfreundliches und CO₂ - emissionsarmes Verfahren bereitgestellt werden.

Die Aufgabe der Erfindung wird gelöst durch ein Verfahren zum Recycling von wertmetallhaltigen Abfallstoffen gemäß Anspruch 1. Das Verfahren wird in einem Wirbelschichtofen durchgeführt und umfasst die Phasen:
I. Anfahren des Wirbelschichtofens; und
II. Kontinuierliche Bearbeitung der wertmetallhaltigen Abfallstoffe.

Der Wirbelschichtofen wird während der Phase II der kontinuierlichen Bearbeitung der wertmetallhaltigen Abfallstoffe autotherm betrieben. Das Verfahren ist deshalb besonders energieeffizient, da nur während der Anfahrphase einmalig Wärme zugeführt werden muss, um die Prozesstemperatur zu erreichen. Das Verfahren ist auch besonders arm an CO₂ - Emissionen, da während der kontinuierlichen Phase II keine zusätzlichen Brennstoffe zum Betreiben des Wirbelschichtofens zugeführt werden müssen. Während der Phase II der kontinuierlichen Bearbeitung der wertmetallhaltigen Abfallstoffe wird die Prozesstemperatur über den Füllstand des Wirbelschichtofens und die Materialdurchflussrate geregelt.

Unter wertmetallhaltigen Abfallstoffen sind im weitesten Sinne alle Stoffe zu verstehen, die Wertmetalle, wie Nickel, Wolfram, Molybdän und/oder Kobalt enthalten und die durch Behandlung mit organischen Stoffen, insbesondere Kohlenwasserstoffen, verunreinigt worden sind. Verunreinigende Kohlenwasserstoffe sind beispielsweise fossile Brennstoffe, wie Erdöl. Die wertmetallhaltigen Abfallstoffe stammen aus Erdölraffinieren, Kraftstofferzeugungsanlagen, in denen sogenannte Gas-to-Liquids Verfahren durchgeführt werden, oder aus Erdöl-Crackingverfahren. Vorzugsweise handelt es sich bei den wertmetallhaltigen Abfallstoffen um Katalysatormaterialen, die in den genannten Verfahren und Anlagen eingesetzt worden sind. Das erfindungsgemäße Verfahren und der erfindungsgemäße Wirbelschichtofen sind besonders geeignet für das Recycling von Katalysatormaterialien aus der erdöl- und erdgasverarbeitenden Industrie, insbesondere aus Erdölraffinerien.

Katalysatormaterialien aus Erdölraffinerien enthalten beispielhaft ca. 80 % Aluminiumoxid, ca. 12 % Molybdän und ca. 8 % Nickel und/oder Kobalt. Die Katalysatorchargen enthalten außerdem drei Korngrößen Fraktionen: Staub, größere Bruchstücke und einen Anteil mit intakten Katalysatorteilchen. Hauptsächliche Verunreinigungen nach Verwendung der Katalysatorchargen in Erdölveredelungsverfahren sind Ölreste und Schwefel.

Die Prozesstemperatur in dem Wirbelschichtofen in der kontinuierlichen, autothermen Phase II wird in Abhängigkeit von der Wertmetall-Zusammensetzung der Abfallstoffe, im Bereich von 630°C bis 730°C gehalten. Wenn die Abfallstoffe einen hohen Anteil an Wolfram aufweisen, wird in einer besonders bevorzugten Ausführungsform des erfindungsgemäßen Verfahrens die Temperatur in der kontinuierlichen, autothermen Phase II im Bereich von 630°C bis 650°C gefahren. In allen anderen Fällen die Temperatur in der kontinuierlichen, autothermen Phase II vorzugsweise im Bereich von 720°C bis 730°C gefahren. Damit wird gewährleistet, dass die an den Abfallstoffen anhaftenden Öl- und Koksreste im Wesentlichen vollständig abgebrannt werden. Dabei dienen die an den wertmetallhaltigen Abfallstoffen anhaftenden Öl- und Koksreste selbst als Energiequelle für den auothermen Prozess und das Halten der Prozesstemperatur im Bereich von 630 bis 730°C. Eine weitere externe Zufuhr von Energie oder Brennstoffen ist während der kontinuierlichen, autothermen Phase II nicht vorgesehen und nicht notwendig. Die Temperatur sollte während der kontinuierlichen, autothermen Phase II nicht über 750°C steigen, da Molybdän bei diesen Temperaturen in die Gasphase übergeht und durch den Betrieb des Wirbelschichtofens mit der Abluft ausgeblasen werden würde.

Die Prozesstemperatur wird in der kontinuierlichen, autothermen Phase II auf einfache Art und Weise über die Steuerung der Rate des Materialdurchflusses in dem Bereich von 630°C bis 730°C gehalten. Dabei hat es sich als günstig erwiesen, wenn die Materialdurchflussrate an wertmetallhaltigen Abfallstoffen 800 bis 1.200 kg/h, vorzugsweise 900 bis 1.100 kg/h, besonders bevorzugt etwa 1.000 kg/h beträgt. Damit wird gewährleistet, dass immer genügend Brennstoff in Form von Ölresten und Koks, die den wertmetallhaltigen Abfallstoffen anhaften, für die Aufrechterhaltung der bevorzugten Prozesstemperatur zur Verfügung stehen. Der Eintrag eines Materialüberschusses in den Wirbelschichtofen, der zu einem unerwünschten Anstieg der Prozesstemperatur über den bevorzugten Bereich von 720 bis 730°C hinaus führen würde, wird durch die Steuerung des Materialdurchflusses in dem oben angegebenen Bereich ebenfalls verhindert. Zur Steuerung der Materialzuflussrate ist dem Wirbelschichtofen in einer weiteren Ausführungsform der Erfindung eine kontinuierlich gesteuerte Wägeeinrichtung, d.h. eine Differentialdosierwaage, vorgeschaltet. Der Aufbau und die Funktionsweise von Differentialdosierwaagen sind dem Fachmann bekannt. Die Menge des Materialeintrags wird mit Hilfe der Wägeeinrichtung gesteuert, wobei eine Rückkopplung mit der Prozesstemperatur im Wirbelschichtofen und der Füllstandsmesseinrichtung des Wirbelschichtofens erfolgt.

Der Füllstand der wertmetallhaltigen Abfallstoffe in dem Wirbelschichtofen in der kontinuierlichen, autothermen Phase II im Bereich von 15 bis 25 %, vorzugsweise von 16% bis 21 % gehalten. Die Verweilzeit des Materials in dem Wirbelschichtofen beträgt damit und unter Berücksichtigung der oben angegeben Materialdurchflussrate ca. 3 bis 4 h. Der Füllstand des Reaktors wird mit Hilfe einer Differenzdruckmessung gesteuert, vorzugsweise in Co-Regulation mit dem Materialdurchfluss. Die Co-Regulation des Füllstandes und des Materialdurchflusses kann in besonders vorteilhafter Weise zur stabilen Regelung der Prozesstemperatur in dem bevorzugten Bereich von 630 bis 730°C eingesetzt werden. Die Differenzdruckmessung wird weiter unten im Zusammenhang mit der Beschreibung des erfindungsgemäßen Wirbelschichtofens näher erläutert.

Zur Temperaturregelung sind im Wirbelschichtofen mehrere Temperaturmesspunkte vorgesehen, die sich sowohl im Materialbett als auch oberhalb des Materialbetts befinden. Jeder Temperaturmesspunkt enthält mindestens einen Temperatursensor. Es hat sich als vorteilhaft erwiesen, wenn der Wirbelschichtofen mit 6 Temperaturmesspunkten ausgestattet ist. Vorzugsweise sind immer zwei Messpunkte redundant vorhanden, um bei möglichen Störungen an Temperatursensoren einem möglichen Komplettausfall des Wirbelschichtofens vorzubeugen.

Die Prozesstemperatur im Bereich von 630°C bis 730 °C muss auch im Materialbett im Inneren des Wirbelschichtofens erreicht und geregelt werden. Dazu hat es sich als vorteilhaft erwiesen, wenn auch die Temperatur des Materialbetts, beispielsweise an mehreren Messpunkten, vorzugsweise an 2-5 Messpunkten, besonders bevorzugt an zwei Messpunkten, gemessen wird. In dieser Ausführungsform befinden sich vier Temperaturmesspunkte oberhalb des Materialbetts. Verändert sich die Prozesstemperatur im Materialbett, so kann diese durch Steuerung der Materialzuflussrate geregelt werden. D.h., wenn die Prozesstemperatur im Materialbett fällt, werden die Materialdurchflussrate und die Menge der zugeführten Prozessluft (Oxidationsluft) erhöht. Umgekehrt werden die Materialdurchflussrate und die Menge der zugeführten Prozessluft erniedrigt, wenn die Temperatur im Materialbett über den Sollbereich hinaus steigt. Weiterhin kann die Prozesstemperatur über die Temperatur der zugeführten Prozessluft beeinflusst werden, da erfindungsgemäß vorgesehen ist, dass die Prozessluft, wie nachfolgend beschrieben, vorgewärmt werden kann.

Zum Abbrennen der organischen Reste, wie Ölreste und Koks, die den wertmetallhaltigen Abfallstoffen anhaften, wird der Wirbelschichtofen mit Prozessluft versorgt. In der kontinuierlichen, autothermen Phase II werden dem Wirbelschichtofen etwa 3.000 bis 5.000 kg/h Prozessluft zugeführt. Diese Luftmenge hat sich als ausreichend erwiesen, um Ölreste und den Koks effizienten und im Wesentlichen vollständig von den wertmetallhaltigen Abfallstoffen abzubrennen. Die Prozessluft wird erfindungsgemäß vor Zuführung in den Wirbelschichtofen auf eine Temperatur im Bereich von 45°C bis 130°C vorgewärmt. Vorzugsweise handelt es sich dabei um vorgewärmte Atmosphärenluft. Damit kann einerseits auf witterungsbedingte Temperaturschwankungen reagiert werden. Andererseits kann mit dem Vorwärmen der Prozessluft, neben der Regelung des Füllstandes und der Rate des Materialdurchflusses im Wirbelschichtofen, zusätzlich Einfluss auf die Prozesstemperatur und insbesondere auf deren Regelung in dem erfindungsgemäßen Bereich von 630 bis 730°C genommen werden. Das Vorwärmen der Prozessluft erfolgt in einer Vorwärmeinrichtung. Zum Vorwärmen der Prozessluft kann beispielsweise die Abwärme des Wirbelschichtofens, d.h. die Wärme der Verbrennungsluft genutzt werden. Dazu können herkömmliche Wärmetauscher genutzt werden.

Erfindungsgemäß wird der Wirbelschichtofen während der kontinuierlichen, autothermen Phase II mit Unterdruck im Bereich von -0,2 bis -0,3 mbar betrieben. Dadurch wird gewährleistet, dass keine schädlichen Abgase, die durch das Abbrennen der organischen Reste, wie von Ölresten und Koks, sowie des Schwefels, die den wertmetallhaltigen Abfallstoffen anhaften, aus dem Wirbelschichtofen austreten können. Gleichzeitig dient das Fahren des Wirbelschichtofens mit Unterdruck als Sicherheitsmaßnahme und dem Explosionsschutz. Neben diesen genannten Vorteilen hat das Fahren unter Unterdruck außerdem ökonomische Vorteile, denn sämtliche Anlagenbauteile können in geringeren Materialstärken ausgeführt werden, als es für das Fahren unter Überdruck notwendig wäre. Während des kontinuierlichen Einbringens werden die wertmetallhaltigen Abfallstoffe im Wirbelschichtofen schlagartig auf die Prozesstemperatur im Bereich von 630°C bis 730 °C erhitzt. Dies führt zum plötzlichen Übergang flüchtiger Ölreste und flüchtiger Koksbestandteile in die Gasphase, die unmittelbar im Reaktorraum des Wirbelschichtofens verbrannt werden. Das Fahren des Wirbelschichtofens mit Unterdruck verhindert das Austreten hochexplosiver Dämpfe in die Atmosphäre in der Umgebung des aus dem Reaktors. Durch diese Betriebsweise wird die Gefahr von Explosionen während der kontinuierlichen, autothermen Phase II des erfindungsgemäßen Verfahrens praktisch ausgeschlossen. Zur Messung des Drucks ist mindestens einen Druckmesser im Reaktorinnenraum vorhanden. Der Unterdruck im Inneren des Wirbelschichtofens im Bereich von -0,2 bis -0,3 mbar wird im Wesentlichen durch Absaugen der Abgase erzeugt und geregelt. Eine weitere Regelung des Innendrucks des Wirbelschichtofens kann optional über die Steuerung der Materialzuflussrate erfolgen. D.h., wenn der Druck im Wirbelschichtofen auf 1 bar oder höher steigt, wird beispielsweise die Materialzufuhr gestoppt und es erfolgt kein Materialeintrag mehr.

Die wertmetallhaltigen Abfallstoffe, wie beispielsweise wiederaufzubereitende Katalysatorchargen aus Erdölraffinerien, können aufgrund der enthaltenen Ölreste in der Regel eine klebrige Konsistenz aufweisen. Solche Abfallchargen sind deshalb nicht mit Förderbändern, Förderschnecken oder ähnlichem transportierbar, da sie zu Verklebungen der Förderstrecken führen. In einer weiteren Ausführungsform umfasst das erfindungsgemäße Verfahren deshalb einen Schritt der Vorbehandlung der wertmetallhaltigen Abfallchargen. Diese Vorbehandlung kann auf ganz einfache Weise erfolgen, zum Beispiel durch Mischung mit bereits behandelten und trockenen Materialien, bis die resultierende Mischung keine klebrigen Eigenschaften mehr aufweist.

Bei dem erfindungsgemäßen Verfahren entstehen Abgase die unter anderem Materialstaub, wie Katalysatorstaub, der aufgrund der Verfahrensweise in dem Wirbelschichtofen ausgetragen wird, und Schwefel, hauptsächlich in Form von Schwefeloxiden, wie SO₂ und SO₃, enthalten. Aus Umweltschutzgründen soll möglichst vermieden werden, dass diese Stoffe in die Umwelt gelangen. In einer weiteren Ausführungsform umfasst das erfindungsgemäße Verfahren deshalb einen Schritt der Abgasreinigung. Zur Entfernung der Materialstäube aus dem Abgasstrom wird der Abgasstrom filtriert. Das Filtern der Abgase erfolgt mit handelsüblichen Filtern, vorzugsweise mit Grob- und Feinfiltern. Geeignete Grob-bzw. Feinfilter bestehen beispielsweise aus Edelstahl. Das erfindungsgemäße Verfahren ist besonders umweltfreundlich, da der Materialstaub, der mittels der Filter aus dem Abgasstrom entfernt wird, direkt dem Fertigprodukt zugeführt werden kann.

Zur Entfernung des Schwefels, d.h. der Schwefeloxide, wird der Abgasstrom gewaschen. In einer bevorzugten Ausführungsform umfasst das Waschen des Abgasstroms mehrere Waschstufen, wobei das Waschen mit Wasser und Kalkmilch erfolgt. Das Waschen mit Wasser dient der Abtrennung restlicher Staubanteile im Abgasstrom. Das Waschen mit Kalkmilch dient der Abtrennung von Schwefeloxiden aus dem Abgasstrom, wobei die Schwefeloxide mit der Kalkmilch zu Gips reagiert werden. Zur Unterstützung der Abtrennung der Schwefeloxide erfolgt in einer besonders bevorzugten Ausführungsform der Abgasreinigung eine zusätzliche Waschung des Abgasstroms mit Natronlauge.

Wie oben dargestellt, ist das erfindungsgemäße Verfahren, insbesondere die Phase II der kontinuierlichen Wiederaufbereitung von wertmetallhaltigen Abfallstoffen, besonders energieeffizient, da es autotherm abläuft, und besonders umweltfreundlich, da der Austritt von Schadstoffen in die Umwelt verhindert wird und die Abwärme des Verfahrens zum Vorheizen der Prozessluft genutzt wird. Die Erfindung leistet zudem einen wesentlichen Beitrag zur Reduzierung des CO₂ - Fußabdrucks der betroffenen Industriezweige und schließt, als Teil der Kreislaufwirtschaft, den Materialkreislauf für die genannten Wertmetalle.

Lediglich in der Anfahrphase I muss dem Wirbelschichtofen Energie zugeführt werden, um die Prozesstemperatur im Bereich von 630°C-730 °C zu erreichen.

Wenn ausschließlich unbehandelte wertmetallhaltige Abfallstoffe zum erstmaligen Befüllen des Wirbelschichtofens in der Anfahrphase benutzt werden würde, könnte dies zum Verkleben des Materials und zum anschließenden Sintern bei Hitzezufuhr führen. Dies würde sich nachteilig auf den Anfahrprozess auswirken. Um dies zu verhindern, wird der Wirbelschichtofen zum Anfahren zunächst mit bereits wiederaufgearbeitetem Material gefüllt, dass insbesondere keine Ölreste und keine Schwefelreste mehr enthält. Dies ist wichtig, da beim einmaligen Zünden des Prozesses nicht zu viel Brennstoff in dem Wirbelschichtofen vorhanden sein darf, was zu einer Explosion führen könnte. In einem Beispiel hat es sich als günstig erwiesen, wenn der Wirbelschichtofen zunächst mit einem Teil von bereits wiederaufgearbeitetem Material, wie vorzugsweise etwa 10 % des Füllstandes, beschickt wird. Zum Starten der Verwirbelung des Materials in dem Wirbelschichtofen wird, gleichzeitig zum Einbringen des bereits behandelten Materials, damit begonnen, Prozessluft, die vorzugsweise vorgewärmt ist, in den Wirbelschichtofen einzublasen. Das Einblasen der Prozessluft in den Wirbelschichtofen erfolgt vorzugsweise von unten. In etwa gleichzeitig erfolgt auch das Erhitzen des Wirbelschichtofens, insbesondere des in den Wirbelschichtofen bereits eingebrachten Materials. Das Erhitzen erfolgt vorzugsweise mit mindestens einem, vorzugsweise zwei, besonders bevorzugt drei Gasbrennern, beispielsweise auf Basis von Erdgas. Danach wird damit begonnen, "unbehandelte" wertmetallhaltige Abfallstoffe zuzuführen. Das Zünden der Reaktion, d.h. des Abbrennens der Öl- und Schwefelreste, erfolgt dann einmalig mit einem separaten Brenner, dem Zündbrenner. Wenn die Prozesstemperatur (630°C bis 730 °C) erreicht ist, werden alle Brenner, einschließlich des Zündbrenners, abgeschaltet und der Prozess verläuft von nun an kontinuierlich und autotherm. Damit erfolgt der Übergang des Verfahrens in die Phase II.

In einer bevorzugten Ausführungsform umfasst das erfindungsgemäße Verfahren gemäß Anspruch 6 in der Phase I des Anfahrens des Wirbelschichtofens die Schritte:
i) Einbringen von bereits wiederaufgearbeitetem Material in den Wirbelschichtofen unter gleichzeitigem Einblasen von Prozessluft in den Wirbelschichtofen und Verwirbeln des Materials,
ii) Erhitzen des Wirbelschichtofens auf die Prozesstemperatur mit mindestens einem, vorzugsweise zwei, besonders bevorzugt drei Gasbrennern,
iii) Zuführung von wertmetallhaltigen Abfallstoffen,
iv) Zünden der Reaktion mit einem Zündbrenner,
v) Abschalten aller Brenner, wenn die Prozesstemperatur von 630°C bis 730°C erreicht ist.

Der Zündbrenner wird im Verlauf des weiteren Verfahrens, d.h. in der kontinuierlichen, autothermen Phase II, nicht mehr benötigt und kann deshalb aus dem Prozess genommen werden.

Die kontinuierliche, autotherme Phase II kann nunmehr über mehrere Monate oder mehrere Jahre betrieben werden. Grenzen sind der Verfahrensdauer lediglich durch den Verschleiß von Anlagenteilen des Wirbelschichtofens gesetzt. Erforderliche Wartungen und der Austausch von Bestandteilen des Wirbelschichtofens würden dann zum Abschalten des Wirbelschichtofens führen. Nach erfolgter Reparatur bzw. Wartung müsste der Wirbelschichtofen dann wieder mit den Schritten der Phase I angefahren werden. Kleinere Reparaturen, die nur zu kurzen Unterbrechungen der kontinuierlichen, autothermen Phase II führen, können durchgeführt werden, ohne dass der Wirbelschichtofen neu angefahren werden muss. Das erfindungsgemäße Verfahren und der erfindungsgemäße Wirbelschichtofen weisen als weiteren Vorteil auf, dass die Temperatur in dem Material, das sich in dem Wirbelschichtofen befindet (15% bis 25 % Füllstand, siehe oben) für etwa 2-3 Tage gehalten wird, wenn der Prozess gestoppt bzw. unterbrochen wird.

Der Materialaustrag der abgebrannten Materialchargen, die keine Öl- und Schwefelreste mehr enthalten, erfolgt am unteren Ende des Wirbelschichtofens, wobei die Materialaustragsrate ebenfalls, wie die Materialzufuhrrate, im Zusammenhang mit der Steuerung des Füllstandes geregelt wird. Der Materialaustrag erfolgt vorzugsweise über Schwerkraft mittels einer Austragsvorrichtung.

Das ausgetragene Material kann einer nachbehandlung unterzogen werden. Beispielsweise kann eine Nachbehandlung in einem Drehrohrofen entsprechend spezieller Kundenwünsche erfolgen.

Üblicherweise erfolgt der Austrag des Materials jedoch in einen Vorlagebehälter, von wo aus der Abtransport über Fördereinrichtungen, wie beispielsweise eine Kühlförderschnecke und pneumatische Fördereinrichtungen, zu einer Abfülleinrichtung für Big Bags erfolgt.

In einem weiteren Aspekt stellt die Erfindung gemäß Anspruch 8 eine Vorrichtung zur Durchführung des erfindungsgemäßen Verfahrens zum Recycling von wertmetallhaltigen Abfallstoffen, insbesondere von Katalysatorchargen aus Erdölraffinerien, bereit. Als zentrales Element umfasst diese Vorrichtung einen Wirbelschichtofen, in dem die Wiederaufbereitung der wertmetallhaltigen Abfallstoffe erfolgt. Der Wirbelschichtofen ist so eingerichtet, dass die Wiederaufbereitung der Abfallstoffe in einem kontinuierlichen und autothermen Verfahren durchgeführt werden kann.

Der erfindungsgemäße Wirbelschichtofen weist unter anderem folgende Bestandteile auf:
- einen Stahlbehälter mit einer feuerfesten Auskleidung,
- einen Einlass für wertmetallhaltige Abfallstoffe,
- mindestens einen Auslass für Materialaustrag (Produkt)
- mindestens einen Einlass für die Zuführung von Prozessluft und,
- eine Füllstandsmesseinrichtung,
- mindestens einen Druckmesser für den Reaktorinnenraum (Reaktor läuft unter -0,2 bis -0,3 mBar Unterdruck)
- mindestens einen, vorzugsweise mehrere, besonders bevorzugt 6 Temperatursensoren, wobei 2 Messpunkte im Materialbett verteilt sind.

Der Stahlbehälter des Wirbelschichtofens umfasst eine branchenübliche feuerfeste Auskleidung. Der Einlass für die wertmetallhaltigen Abfallstoffe ist vorzugsweise im oberen Drittel, besonders bevorzugt im oberen Viertel des Wirbelschichtofens angeordnet. So werden die eingetragenen Abfallstoffe unmittelbar nach Eintrag in den Wirbelschichtofen durch die von unten eingeblasene Prozessluft verwirbelt. Ein Absetzen der Abfallstoffe nach dem Eintrag in den Wirbelschichtofen wird damit verhindert.

Der Wirbelschichtofen weist mindestens einen Auslass, vorzugsweise mehrere Auslässe, besonders bevorzugt zwei Auslässe für den Materialaustrag, d.h. für den Austrag des abgebrannten und von Öl- und Schwefelresten befreiten Abfallmaterials, auf. Der oder die Auslässe für den Materialaustrag sind in einer bevorzugten Ausführungsform des erfindungsgemäßen Wirbelschichtofens am unteren Ende des Wirbelschichtofens angeordnet, damit der Materialaustrag auf einfache Art und Weise mittels Schwerkraft über eine Materialaustragsvorrichtung erfolgen kann. Der Materialaustrag wird dabei durch Ansteuerung von Klappen geregelt, die in den Auslässen für den Materialaustrag angeordnet sind.

Das Einblasen der Prozessluft erfolgt über mindestens einen Einlass, vorzugsweise von unten in den Wirbelschichtofen. Zum Erreichen der gewünschten Verwirbelung der wertmetallhaltigen Abfallstoffe weist der erfindungsgemäße Wirbelschichtofen weiterhin einen Luftverteiler zur Verteilung der Prozessluft auf, die über den mindestens einen Einlass zugeführt wird. Der Luftverteiler ist vorzugsweise im unteren Bereich des Wirbelschichtofens angeordnet. Um die Luftverwirbelung noch weiter zu optimieren, weist der Luftverteiler zusätzlich Luftdüsen auf.

Die Rate der Zufuhr der wertmetallhaltigen Abfallstoffe und die Rate des Materialaustrags, d.h. insgesamt die Materialdurchflussrate, werden in dem erfindungsgemäßen Wirbelschichtofen mithilfe einer Füllstandsmesseinrichtung gesteuert. Der erfindungsgemäße Wirbelschichtofen umfasst deshalb eine Füllstandsmesseinrichtung, die zuverlässig bei den hohen Prozesstemperaturen im Bereich von 630 °C - 730 °C und dem in dem Wirbelschichtofen herrschenden Unterdruck im Bereich von -0,2 bis -0,3 mbar arbeitet. In einer besonders bevorzugten Ausführungsform beruht die Füllstandsmesseinrichtung auf einer Differenzdruckmessung zwischen zwei Messpunkten, wovon ein Messpunkt, d.h. ein erster Drucksensor oberhalb, und ein Messpunkt, d.h. ein zweiter Drucksensor unterhalb des Materialbetts angeordnet ist. Zur Erhöhung der Zuverlässigkeit und Messsicherheit ist diese Differenzdruckmessung in einer bevorzugten Ausführungsform der Erfindung redundant vorhanden. Die Füllstandsmesseinrichtung ist so eingerichtet, dass der Füllstand des Wirbelschichtofens mithilfe der Differenzdruckmessung unter Berücksichtigung der in dem Wirbelschichtofen herrschenden Temperatur und des in dem Wirbelschichtofen herrschenden Drucks berechnet wird. Wie oben im Zusammenhang mit dem erfindungsgemäßen Verfahren bereits beschrieben, hat es sich als günstig erwiesen, wenn der Füllstand des Wirbelschichtofens im Bereich von 15 % bis 25 % gehalten wird.

Wie ebenfalls oben im Zusammenhang mit dem erfindungsgemäßen Verfahren erwähnt, wird der Wirbelschichtofen mit einem Unterdruck, d.h. mit einem Druck im Bereich von -0,2 bis - 0,3 mbar betrieben. Zur Druckmessung im Innenraum weist der Wirbelschichtofen mindestens einen Druckmesser auf. Die Erzeugung des Unterdrucks erfolgt durch Absaugen der Prozessluft. In einer weiteren Ausführungsform weist der erfindungsgemäße Wirbelschichtofen deshalb eine Absaugeinrichtung für die Prozessluft auf.

Wie ebenfalls bereits erwähnt, wird die Temperatur im Materialbett im Bereich von 630°C bis 730 °C gehalten. Für eine zuverlässige Temperaturüberwachung weist der erfindungsgemäße Wirbelschichtofen deshalb mindestens einen, vorzugsweise mehrere, besonders bevorzugt sechs Temperatursensoren auf, wobei vier Messpunkte vorzugsweise oberhalb des Materialbetts angeordnet sind, um die Temperatur der Gasphase zu messen, und zwei Messpunkte vertikal im Materialbett verteilt sind. In einer besonders bevorzugten Ausführungsform sind immer zwei Messpunkte redundant vorhanden, um bei möglichen Störungen an Temperatursensoren einem möglichen Komplettausfall des Wirbelschichtofens vorzubeugen.

Die erfindungsgemäße Vorrichtung weist weiterhin eine Vorwärmeinrichtung zum Vorwärmen der Prozessluft auf 45°C - 130°C auf. In energetisch vorteilhafter Weise erfolgt das Vorwärmen der Prozessluft vor Einblasen in den Wirbelschichtofen über einen Wärmetauscher, der ebenfalls Bestandteil einer weiteren Ausführungsform der erfindungsgemäßen Vorrichtung ist. Die nötige Wärme zum Vorwärmen der Prozessluft wird dabei aus der Abluft bzw. dem Abgas des Wirbelschichtofens gewonnen.

Das Abgas, auch als Abluft oder Rauchgas bezeichnet, wird über einen Abgasauslass abgesaugt, der sich am oberen Ende des Wirbelschichtofens befindet.

Der erfindungsgemäße Wirbelschichtofen weist weiterhin eine Steuereinrichtung auf. Die Steuereinrichtung ist insbesondere dazu eingerichtet, die autotherme Fahrweise der kontinuierliche Phase II des erfindungsgemäßen Verfahrens zu gewährleisten. Dazu wird durch die Steuereinrichtung die Füllstandsmesseinrichtung des Wirbelschichtofens derart gesteuert, dass, mittels der Differenzdruckmessung des Wirbelschichtofens und unter Berücksichtigung der hohen Prozesstemperaturen von 630°C bis 730°C sowie des in dem Wirbelschichtofen herrschenden Drucks von -0,2 bis -0,3 mbar der Füllstand des Wirbelschichtofens im Bereich von 15 % bis 25 % gehalten wird. Die Füllstandsregelung erfolgt dabei über die Steuerung der Rate des Materialzuflusses und der Rate des Materialaustrages, insgesamt also der Rate des Materialdurchflusses, wobei der Materialaustrag über das Ansteuern von Klappen in dem mindestens über einen Materialauslass verfügenden Reaktors durch Schwerkraft erfolgt. Die Steuerung der Materialzuflussrate erfolgt unter anderem mit einer Differentialdosierwaage, die im Materialzufuhrbereich der erfindungsgemäßen Vorrichtung angeordnet ist und die mit der Füllstandsmesseinrichtung und Temperaturmessung der Prozesstemperatur gekoppelt ist.

Die Steuereinrichtung ist weiterhin dazu eingerichtet, die Prozesstemperatur im Bereich von 630°C bis 730°C zu halten, was einerseits über die Steuerung der Rate des Materialzuflusses und der Rate des Materialaustrags, und andererseits durch Vorwärmen der Prozessluft auf eine Temperatur im Bereich von 45°C - 130°C mittels der Vorwärmeinrichtung erreicht wird.

Die Steuereinrichtung ist weiterhin dazu eingerichtet, den Druck im Innenraum des Wirbelschichtofens im Bereich zwischen -0,2 bis -0,3 mbar einzuhalten. Hierfür wechselwirkt die Steuereinrichtung mit mindestens einem Drucksensor, der im Inneren des Wirbelschichtofens angeordnet ist, und einer Absaugvorrichtung im Abgasstrom des Wirbelschichtofens.

In einer Ausführungsform der Erfindung ist die Steuereinrichtung ein PC, ein Tablet, ein Prozessrechner oder ein anderes datenverarbeitendes Gerät, besonders bevorzugt eine fehlersichere Steuereinrichtung (SPS). Die fehlersichere Steuereinrichtung steht über herkömmliche Mittel zur Datenübertragung mit der erfindungsgemäßen Vorrichtung in Verbindung.

Die erfindungsgemäße Vorrichtung weist gemäß Anspruch 11 zur Durchführung der kontinuierlichen autothermen Phase II des erfindungsgemäßen Verfahrens in weiteren Ausführungsformen ein oder mehrere Hilfs- und Zusatzeinrichtungen auf, die beispielsweise ausgewählt sind aus
- einer Differentialdosierwaage im Materialzufuhrbereich, die mit der Füllstandsmesseinrichtung und der Temperaturmesseinrichtung der Prozesstemperatur gekoppelt ist und die zur Rate der Materialzufuhr in den Wirbelschichtofen gesteuert wird,
- Mitteln zum Weitertransport des ausgetragenen behandelten Materials, beispielsweise umfassend eine Kühlförderschnecke, eine pneumatische Fördereinrichtung und eine Abfüllvorrichtung für Big Bags,
- wahlweise einem Drehrohrofen für die Calcinierung und/oder Weiterverarbeitung des Produkts entsprechend Kundenwünschen,
- einem Abgasreinigungssystem, beispielsweise aufweisend
   o mindestens einen Grob- und mindestens einen Feinfilter für die Abtrennung von Materialstaub und dessen Rückführung in das Wiederaufbereitungsverfahren,
   o mehrere Waschstufen zur Entschwefelung des Abgasstroms, beispielsweise eine Waschstufe mit Wasser und zwei Waschstufen mit Kalkmilch,
   o wahlweise eine zusätzliche Stufe zum Waschen des Abgasstroms mit verdünnter Natronlauge,
- einer oder mehreren Explosionsklappen im Abgassystem zum Schutz des Wirbelschichtofens bei Überdruck,
- einem Wärmetauscher zum Abkühlen der Abluft im Abgasstrom und zum gleichzeitigen Vorheizen der Prozessluft auf 45 bis 130 °C.

Für die Phase I des Anfahrens weist der erfindungsgemäße Wirbelschichtofen mindestens einen, vorzugsweise zwei, besonders bevorzugt drei Gasbrenner auf, die nur zum Erhitzen des Wirbelschichtofens beim Anfahren betrieben werden. Die Gasbrenner können beispielsweise mit Erdgas betrieben werden. Für die Gewährleistung einer effizienten und gleichmäßigen Erhitzung des Innenraums des Wirbelschichtofens während der Anfahrphase sind die drei Gasbrenner in einer beispielhaften Ausführungsform gleichmäßig, d.h. in einem Abstand von 120° über den Querschnitt des Wirbelschichtofens verteilt angeordnet. Die Gasbrenner sind zudem im oberen Drittel des Wirbelschichtofens angeordnet, sodass der Hitzeeintrag beim Anheizen des Wirbelschichtofens von oben auf das Materialbett erfolgt. Die in den Innenraum des Wirbelschichtofens ragenden Zuführungen für die von den Gasbrennern erzeugte Heißluft sind in einer bevorzugten Ausführungsform so angeordnet, dass der Lufteintritt nach unten in einem Winkel, beispielsweise von 45°, zur Wand des Stahlbehälters erfolgt. Dadurch kann gewährleistet werden, dass der Innenraum des Wirbelschichtofens, und insbesondere die Ausmauerung das von dem wertmetallhaltigen Abfallstoffen gebildete Bett beim Anfahren des Wirbelschicht Ofens gleichmäßig erhitzt wird.

Während der Phase I des Anfahrens des Wirbelschichtofens muss das Abbrennen der Öl- und Schwefelreste von den wertmetallhaltigen Abfallstoffen initiiert werden. Hierfür weist die erfindungsgemäße Vorrichtung, insbesondere der erfindungsgemäße Wirbelschichtofen in einer weiteren Ausführungsform einen Zündbrenner auf. Der Zündbrenner wird ebenfalls vorzugsweise mit Erdgas betrieben Dieser Zündbrenner dient dem einmaligen Zünden der Reaktion im Wirbelschichtofen, wodurch zunächst der Wirbelschichtofen und das Materialbett auf die Prozesstemperatur von 630°C-730 °C erhitzt werden und nach Erreichen dieser Prozesstemperatur die kontinuierliche autotherme Phase II des Verfahrens zum Recycling von wertmetallhaltigen Abfallstoffen gestartet wird. Nachdem die Behandlung der Abfallstoffe in die kontinuierliche autotherme Phase II übergegangen ist, wird der Zündbrenner nicht mehr benötigt und wird vorzugsweise aus dem Prozess genommen.

Der Wirbelschichtofen der erfindungsgemäßen Vorrichtung kann wahlweise zusätzliche Reservestutzen für das Zuführen und Abführen von Luft, Produkt, Abgas usw. aufweisen.

Als Beispiel von behandelten Abfallstoffen sind Katalysatormaterialien aus der Erdölindustrie zu nennen. Diese enthalten ca. 80 % Aluminiumoxid, ca. 12 % Molybdän und ca. 8 % Nickel und/oder Kobalt und sind beliebte Zuschlagstoffe in der Stahlindustrie o.ä., beispielsweise als Flussmittel, Schlackebildner oder als Bestandteil von Stahllegierungen. In einem weiteren Aspekt betrifft die Erfindung daher die Verwendung der mit dem erfindungsgemäßen Verfahren behandelten Abfallstoffe in der Stahlindustrie und Feinchemikalienherstellung.

Die Erfindung wird nachstehend anhand von vier Zeichnungen näher erläutert.

### Es zeigen:

- **Figur 1**: ein Verfahrensschema zur Illustration der Anfahrphase I;
- **Figur 2**: ein Verfahrensschema zur Illustration der kontinuierlichen, autothermen Phase II;
- **Figur 3**: einen Längsschnitt durch den Wirbelschichtofen gemäß der Erfindung;
- **Figur 4**: einen Querschnitt durch den Reaktor zur Visualisierung der Anordnung der Brenner.
- **Figur 5**: einen Querschnitt durch den Reaktor zur Visualisierung einer alternativen Ausgestaltung der Anordnung der Brenner.

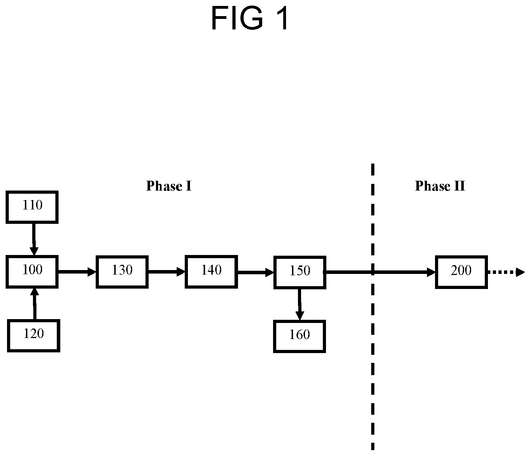

**Figur 1** zeigt ein Ablaufschema zur Illustration der Phase I des Anfahrens des Wirbelschichtofens gemäß der Erfindung. Die Anfahrphase des Wirbelschichtofens kann wie folgt beschrieben werden:
**100**
   Der Wirbelschichtofen wird zum Anfahren zunächst mit ca. 1,5 t von bereits wiederaufgearbeitetem Material gefüllt, dass insbesondere keine Ölreste und keine Schwefelreste mehr enthält. Wenn ausschließlich unbehandelte Abfallstoffe zum erstmaligen Befüllen des Wirbelschichtofens in der Anfahrphase benutzt werden würde, könnte dies zum Verkleben des Materials und zum anschließenden Sintern bei Hitzezufuhr führen. Dies würde sich nachteilig auf den Anfahrprozess auswirken. Das anfängliche Befüllen mit bereits wiederaufgearbeiteten Abfallstoffen ist außerdem wichtig, da beim einmaligen Zünden des Prozesses nicht zu viel Brennstoff in dem Wirbelschichtofen vorhanden sein darf, was zu einer nicht zu kontrollierenden Wärmeentwicklung führen würde.
**110**
   Gleichzeitig zu Schritt 100 erfolgt das Erhitzen des Wirbelschichtofens, insbesondere der in den Wirbelschichtofen bereits eingebrachten und bereits behandelten Abfallstoffe. Das Erhitzen erfolgt vorzugsweise mit mindestens einem, vorzugsweise zwei, besonders bevorzugt drei Gasbrennern auf Basis von Erdgas.
**120**
   Zum Starten der Verwirbelung des Materials in dem Wirbelschichtofen wird ebenfalls bereits mit Beginn des Einbringens der bereits behandelten Abfallstoffe im Schritt 100 damit begonnen, Prozessluft, die vorzugsweise auf 45 bis 130°C vorgewärmt ist, in den Wirbelschichtofen einzublasen. Das Einblasen der Prozessluft in den Wirbelschichtofen erfolgt vorzugsweise von unten.
**130**
   Danach wird damit begonnen, "unbehandelte" wertmetallhaltige Abfallstoffe zuzuführen.
**140**
   Nach Beginn der Zuführung der unbehandelten wertmetallhaltigen Abfallstoffe wird die Reaktion, d.h. das Abbrennen der Öl- und Schwefelreste, dann einmalig mit einem separaten Brenner, dem Zündbrenner gezündet.
**150**
   Wenn die Prozesstemperatur (630°C bis 730 °C) erreicht ist werden alle Brenner, einschließlich des Zündbrenners, abgeschaltet und der Prozess geht über in die Phase II, d.h. der Prozess verläuft von nun an kontinuierlich und autotherm **200.**
**160**
   Nach erfolgreichem Abschluss der Anfahrphase I wird der Zündbrenner aus dem Prozess genommen. Der Prozess verläuft von nun an kontinuierlich und autotherm **200** über viele Monate bis hin zu mehreren Jahren. Eine Unterbrechung des Verfahrens muss nur erfolgen, wenn aufgrund von Materialverschleiß eine Wartung oder Reparatur an dem Wirbelschichtofen notwendig ist. Wartungen, die dabei innerhalb von 2 bis 3 Tagen durchgeführt werden können, erfordern keine erneute Anfahrphase I; da die Prozesstemperatur im Materialbett über diesen Zeitraum zwar sinkt, aber immer noch ausreichend hoch zur Fortführung der kontinuierlichen Phase II ist. Nach Abschluss einer solchen kurzzeitigen Wartung oder Reparatur kann deshalb unmittelbar mit dem kontinuierlichen und autothermen Betrieb des Wirbelschichtofens fortgefahren werden.

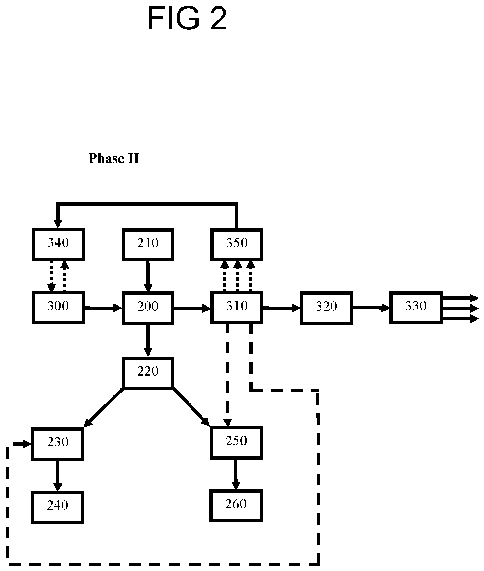

**Figur 2** zeigt ein Ablaufschema zur Illustration der kontinuierlichen, autothermen Phase II **200** des Recyclings von wertmetallhaltigen Abfallstoffen in dem erfindungsgemäßen Wirbelschichtofen. Die kontinuierliche, autotherme Phase II **200** kann wie folgt beschrieben werden:
**200**
bezeichnet die kontinuierliche, autotherme Phase II im Wirbelschichtofen. Die Besonderheit an der Phase II ist, dass dem Wirbelschichtofen nach dem einmaligen Zünden außer dem Vorheizen der Prozessluft keine Wärme mehr zugeführt werden muss. Den wertmetallhaltigen Abfallstoffen haften so viel Schwefel und Kohlenstoffverbindungen an, dass genügend Brennstoff im System vorhanden ist, um die Prozesstemperatur im Bereich von 630 °C bis 730 °C zu halten.

In diesem Beispiel wurden als wertmetallhaltige Abfallstoffe Katalysatormaterialien aus der Erdölindustrie verwendet. Diese enthalten ca. 80 % Aluminiumoxid, ca. 12 % Molybdän und ca. 8 % Nickel und/oder Kobalt. Die Katalysatorchargen enthalten außerdem drei Korngrößen Fraktionen: Staub, größere Bruchstücke und einen Anteil mit intakten Katalysatorteilchen. Hauptsächliche Verunreinigungen nach Verwendung der Katalysatorchargen in Erdölveredelungsverfahren sind Ölreste und Schwefel.

Die kontinuierliche, autotherme Phase II im Wirbelschichtofen ist gekennzeichnet durch folgende Prozessparameter:
- Reaktortemperatur: 630°C-730 °C
- Prozessluft: 45-130°C, 3.000 bis 5.000 kg/h
- Materialdurchflussrate: ca. 1.000 kg/h
- Verweilzeit des Materials: ca. 4h
- Füllstand des Reaktors: 15 % bis 25 %
- Druck im Reaktor: -0,2 bis -0,3 mbar

**210**
symbolisiert die Zufuhr von wertmetallhaltigen Abfallstoffen, die im oberen Teil des Wirbelschichtofens stattfindet. Die Prozesstemperatur wird in der kontinuierlichen, autothermen Phase II vorzugsweise auf einfache Art und Weise über die Steuerung der Materialdurchflussrate in dem bevorzugten Bereich von 630°C bis 730°C gehalten. Die Materialdurchflussrate an zu behandelnden wertmetallhaltigen Abfallstoffen liegt im Bereich von 800 bis 1.200 kg/h, vorzugsweise 900 bis 1.100 kg/h, besonders bevorzugt etwa 1.000 kg/h. Zur Steuerung der Materialzuflussrate ist dem Wirbelschichtofen eine Differentialdosierwaage vorgeschaltet. Die Menge des Materialeintrags wird mit Hilfe einer SPS, die die Differentialdosierwaage ansteuert, geregelt, wobei eine Rückkopplung mit der Prozesstemperatur im Wirbelschichtofen und der Füllstandsmesseinrichtung des Wirbelschichtofens erfolgt.

Wenn die Temperatur im Materialbett unter den Sollbereich fällt, wird die Materialzuflussrate erhöht. Umgekehrt wird die Materialzuflussrate erniedrigt, wenn die Temperatur im Materialbett über den Sollbereich hinaus steigt.

**220**
Der Materialaustrag des behandelten Materials erfolgt am unteren Ende des Wirbelschichtofens per Schwerkraft mittels einer Austragsvorrichtung, die ansteuerbare Klappen enthält.

**230, 240**
Nach Austritt aus dem Wirbelschichtofen kann das behandelte Material je nach Kundenwünschen weiter bearbeitet werden, zum Beispiel in einem Drehrohrofen **230.** Danach wird das so weiter bearbeitete Material zur Lieferung an Kunden verpackt **240.**

**250**
Üblicherweise erfolgt der Austrag des Materials jedoch in einen Vorlagebehälter, von wo aus der Abtransport über Fördereinrichtungen, wie beispielsweise eine Kühlförderschnecke und pneumatische Fördereinrichtungen, zu einer Abfülleinrichtung für Big Bags erfolgt.

**260**
symbolisiert das Abfüllen in Big Bags.

**300**
symbolisiert die Zufuhr von Prozessluft. Zum Abbrennen organischer Reste, wie von Ölresten und Koks, die den wertmetallhaltigen Abfallstoffen anhaften, wird der Wirbelschichtofen in der kontinuierlichen, autothermen Phase II mit etwa 3.000 bis 5.000 kg/h Prozessluft versorgt. Diese Luftmenge hat sich als ausreichend erwiesen, um Ölreste und den Koks effizient und im Wesentlichen vollständig von den wertmetallhaltigen Abfallstoffen abzubrennen. Die Prozessluft wird idealerweise vor Zuführung in den Wirbelschichtofen vorgewärmt auf eine Temperatur im Bereich von 45°C bis 130°C. Dabei handelt es sich um vorgewärmte Atmosphärenluft. Zum Vorwärmen der Prozessluft kann beispielsweise die Abwärme des Wirbelschichtofens, d.h. die Wärme der gefilterten Verbrennungsluft **310** genutzt werden, wobei das Vorwärmen in einem Wärmetauscher **340** erfolgt. Der Wärmeaustausch zum Vorwärmen der Prozessluft **300** wird durch die gepunkteten Pfeile zwischen **300** und **340** symbolisiert. Zum Vorwärmen der Prozessluft **300** wird Heißdampf **350** verwendet. Der Heißdampf **350** wird durch Erhitzen von Wasser mittels der in der nachfolgenden Stufe **310** beschriebenen gefilterten Abluft erzeugt.

**310**
Bei dem erfindungsgemäßen Verfahren entstehen Abgase die unter anderem Materialstaub, der aufgrund der Verfahrensweise in dem Wirbelschichtofen ausgetragen wird, und Schwefel, hauptsächlich in Form von Schwefeloxiden, wie SO₂ und SO₃, enthalten. Aus Umweltschutzgründen soll möglichst vermieden werden, dass diese Stoffe in die Umwelt gelangen. **310** symbolisiert den ersten Schritt der Abgasreinigung. Zur Entfernung der Materialstäube aus dem Abgasstrom wird der Abgasstrom filtriert. Das Filtern der Abgase erfolgt mit handelsüblichen Filtern, vorzugsweise mit Grob- und Feinfiltern. Geeignete Grob-und Feinfilter bestehen beispielsweise aus Edelstahl. Das erfindungsgemäße Verfahren ist besonders umweltfreundlich, da die Materialstäube, die mittels der Grob- und Feinfilter aus dem Abgasstrom entfernt werden, direkt dem behandelten Produkt zugeführt werden (symbolisiert durch die gestrichelte Linie zwischen **310** und **250** bzw. zwischen **310** und **230).**

**320**
Zur Entfernung des Schwefels, d.h. der Schwefeloxide, wird der Abgasstrom gewaschen. Das Waschen des Abgasstroms umfasst in der Regel mehrere Waschstufen, wobei das Waschen mit Wasser und Kalkmilch erfolgt. Das Waschen mit Wasser dient der Abtrennung restlicher Staubanteile im Abgasstrom. Das Waschen mit Kalkmilch dient hat sich der Abtrennung von Schwefeloxiden aus dem Abgasstrom, wobei die Schwefeloxide mit der Kalkmilch zu Gips reagiert werden. Zur Unterstützung der Abtrennung der Schwefeloxide kann in einer weiteren Waschstufe eine zusätzliche Waschung des Abgasstroms mit Natronlauge erfolgen.

**330**
symbolisiert die gereinigte und temperaturgeminderte Verbrennungsluft, die in die Atmosphäre entlassen wird.

**350**
symbolisiert Heißdampf, der durch Erhitzen von Wasser mittels der in Stufe 310 beschriebenen gefilterten Abluft erzeugt wird. Der Heißdampf wird in dem erfindungsgemäßen Verfahren dazu genutzt, um die Prozessluft **300** in dem Wärmtauscher **340** vorzuwärmen.

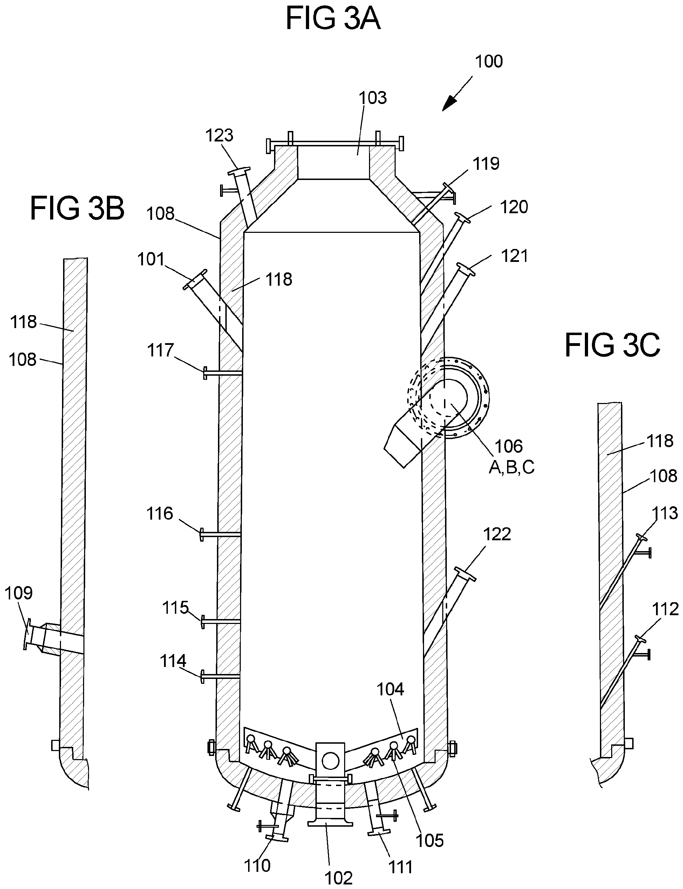

**Figur 3A** zeigt eine schematische Darstellung des Wirbelschichtofens **100** der erfindungsgemäßen Vorrichtung. Der Wirbelschichtofen **100** umfasst einen Stahlbehälter **108** mit einer feuerfesten Auskleidung **118.** Das Einfüllen der wertmetallhaltigen Abfallstoffe während der kontinuierlichen, autothermen Phase II erfolgt über den Materialeinlass **101.** In der Anfahrphase I wird über den Materialeinlass **101** auch die Vorbefüllung mit bereits behandeltem Material vorgenommen. Der Materialauslass des behandelten Materials erfolgt am unteren Ende des Stahlbehälters **108** über die Materialauslässe **110** und **111** per Schwerkraft. An die Materialauslässe **110** und **111** können Austragsvorrichtungen mit integrierten Klappen zur Steuerung der Rate des Materialauslasses angeordnet sein

Die Zufuhr der Prozessluft **102,** welche vorzugsweise vorgewärmt ist, erfolgt am unteren Ende des Stahlbehälters **108.** Zur besseren Verteilung der Prozessluft und optimalen Verwirbelung der wertmetallhaltigen Abfallstoffe wird die Prozessluft über einen Luftverteiler **104** mit einer Vielzahl von Luftdüsen **105** in den Stahlbehälter **108** eingeblasen. Der Ausgang **103** für die Abgase bzw. die Verbrennungsluft befindet sich am oberen Ende des Stahlbehälters **108.**

Die Rate der Zufuhr der wertmetallhaltigen Abfallstoffe und die Rate des Materialaustrags werden in dem Wirbelschichtofen **100** mit Hilfe einer Füllstandsmesseinrichtung gesteuert. Dafür umfasst der Wirbelschichtofen eine Füllstandsmesseinrichtung, die zuverlässig bei den hohen Prozesstemperaturen im Bereich von 630°C bis 730°C und dem in dem Stahlbehälter herrschenden Unterdruck im Bereich von -0,2 bis -0,3 mbar arbeitet. Die Füllstandsmesseinrichtung arbeitet auf Basis einer Differenzdruckmessung zwischen zwei Messpunkten **112, 113,** wovon ein Messpunkt, d.h. ein erster Drucksensor **113** oberhalb, und ein Messpunkt, d.h. ein zweiter Drucksensor **112** unterhalb des Materialbetts in dem Stahlbehälter **108** des Wirbelschichtofens **100** angeordnet ist. Zur Erhöhung der Zuverlässigkeit und Messsicherheit ist diese Differenzdruckmessung redundant vorhanden. Die Füllstandsmesseinrichtung ist so eingerichtet, dass der Füllstand des Stahlbehälters mithilfe der Differenzdruckmessung, vorzugsweise aber unter Berücksichtigung der in dem Stahlbehälter herrschenden Temperatur und des in dem Stahlbehälter herrschenden Drucks berechnet wird. Der Füllstand des Stahlbehälters **108** wird im Bereich von 15% bis 25%, vorzugsweise 16% bis 21% gehalten.

Die Prozesstemperatur wird im Materialbett im Bereich von 630°C bis 730 °C gehalten. Für eine zuverlässige Temperaturüberwachung weist der Wirbelschichtofen **100** deshalb mindestens einen, vorzugsweise mehrere, besonders bevorzugt sechs Temperatursensoren **114, 115** und **116** auf, wobei wenigstens zwei Messpunkte vorzugsweise vertikal über das Materialbett verteilt sind. Zusätzlich kann der Wirbelschichtofen **100** weitere Temperatursensoren, wie beispielsweise den Temperatursensor **117** aufweisen, die die Temperatur oberhalb des Materialbettes innerhalb des Stahlbehälters **108** messen.

Der Wirbelschichtofen **100** wird während der kontinuierlichen, autothermen Phase II mit Unterdruck, vorzugsweise mit einem Druck im Bereich von -0,2 bis -0,3 mbar betrieben. Zur Messung des Drucks ist mindestens ein Druckmesser **119** im Innenraum de Wirbelschichtofens vorhanden. Der Unterdruck im Inneren des Wirbelschichtofens im Bereich von -0,2 bis -0,3 mbar wird u.a. durch Absaugen der Abgase über den Auslass **103** erzeugt und geregelt. Während der Anfahrphase I wird der Wirbelschichtofen **100** mit den drei Brennern **106A, 106B** und **106C** aufgeheizt, bis in dem Stahlbehälter **108** die Betriebstemperatur im Bereich von 630°C bis 730 °C erreicht ist. In **Figur 3A** ist zu erkennen, dass die drei Brenner über die Zugänge **106A, 106B** und **106C** im oberen Drittel des Stahlbehälters 108 angeordnet sind. Die Einlassrohre der drei Brenner **106A, 106B** und **106C** sind in der hier gezeigten Ausführungsform so angeordnet, dass der Lufteinstrom in einem Winkel von 45° relativ zur Wandung des Stahlbehälters **108** erfolgt. Andere Möglichkeiten zur Anordnung der Einlassrohre sind ebenfalls denkbar.

Die erfindungsgemäße Vorrichtung kann neben dem Wirbelschichtofen **100** ein oder mehrere Hilfs- und Zusatzeinrichtungen enthalten, die ausgewählt sind aus
- einer Differentialdosierwaage im Materialzufuhrbereich (gekoppelt mit der Füllstandsmesseinrichtung und Temperaturmessung der Prozesstemperatur),
- einem Mittel zum Weitertransport des ausgetragenen behandelten Materials, beispielsweise umfassend eine Kühlförderschnecke, eine pneumatische Fördereinrichtung und eine Abfüllvorrichtung für Big Bags,
- wahlweise einem Drehrohrofen für die Calcinierung und/oder Weiterverarbeitung des Produkts,
- einem Abgasreinigungssystem, beispielsweise aufweisend
   - mindestens einen Grob-und mindestens einen Feinfilter für die Abtrennung von Materialstaub und dessen Abführung in den Produktstrom,
   - mehrere Waschstufen zur Entschwefelung (zu Gips) des Abgasstroms, beispielsweise eine Waschstufe mit und zwei Waschstufenmit Kalkmilch,
   - wahlweise eine zusätzliche Stufe zum Waschen des Abgasstroms mit verdünnter Natronlauge,
- einer oder mehreren Explosionsklappen im Abgassystem zum Schutz bei Überdruck,
- einem Wärmetauscher zum Abkühlen der Abluft im Abgasstrom, wobei die Abwärme zum Vorheizen der Prozessluft benutzt wird.

Weiterhin weist die erfindungsgemäße Vorrichtung eine Steuereinrichtung für die Steuerung des Wirbelschichtofens **100** während der kontinuierlichen, autothermen Phase II auf, die dazu eingerichtet ist,
- die Füllstandsmesseinrichtung derart zu steuern, dass, mittels der Differenzdruckmessung **112, 113** und unter Berücksichtigung der hohen Prozesstemperaturen von 630°C bis 730°C der Füllstand des Stahlbehälters **108** im Bereich von etwa 15% bis 25 %, vorzugsweise 16% bis 21 % gehalten wird, wobei über das Ansteuern der Klappe in den Materialauslässen **110** und **111** der Materialaustrag durch Schwerkraft erfolgt;
- und/oder die Prozesstemperatur im Bereich von 630°C bis 730°C zu halten, wobei mittels des Wärmetauschers die Prozessluft auf eine Temperatur im Bereich von 45°C
- 130°C vorgewärmt wird,
- und/oder den Druck im Innenraum des Stahlbehälters **108** des Wirbelschichtofens **100** im Bereich zwischen -0,2 bis -0,3 mBar einzustellen.

Der erfindungsgemäße Wirbelschichtofen **100** kann weiterhin Reservestutzen **120, 121, 122** aufweisen, sowie ein Schauglas **123** mit Spülanschluss zur visuellen Prozessüberwachung.

**Figur 3B** zeigt einen Ausschnitt aus der Wandung des Wirbelschichtofens **100** mit dem Stahlbehälter **108,** die den Anschluss **109** des Zündbrenners für das Anfahren des Wirbelschichtofens in der Phase I aufweist. Der Zündbrenner wird nach erfolgreichem Abschluss der Anfahrphase I aus dem Prozess genommen.

**Figur 3C** zeigt einen Ausschnitt der Wandung des Wirbelschichtofens **100** mit dem Stahlbehälter **108,** der den unteren Drucksensor **112** und den oberen Drucksensor **113** für die Differenzdruckmessung als Basis für die Füllstandsmesseinrichtung der erfindungsgemäßen Vorrichtung aufweist.

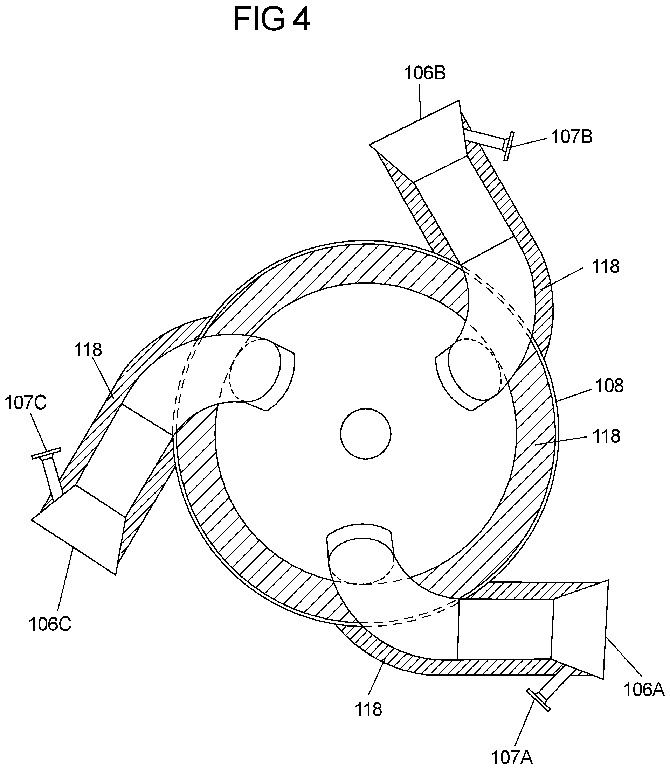

**Figur 4** zeigt einen Querschnitt durch den Wirbelschichtofens **100** mit den drei Brennern **106A, 106B** und **106C,** die für das Aufheizen des Stahlbehälters **108** während der Anfahrphase I bis zum Erreichen der Prozesstemperatur im Bereich von 630°C bis 730 °C mit Erdgas betrieben werden. Die drei Brenner **106A, 106B** und **106C** sind über den Umfang des Stahlbehälters **108** im Abstand von jeweils 120° angeordnet. Die Brennerzugänge **106A, 106B** und **106C** enthalten Stahlrohre, die von einer feuerfesten Beschichtung **118** umgeben sind.

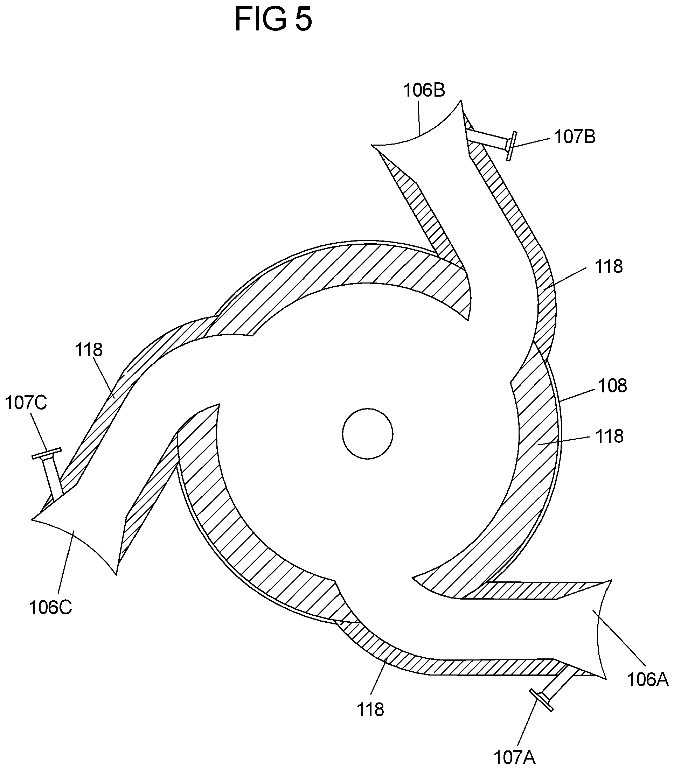

**Figur 5** zeigt einen Querschnitt durch den Wirbelschichtofens **100** mit den drei Brennerzugängen **106A, 106B** und **106C,** die für das Aufheizen des Stahlbehälters **108** während der Anfahrphase I bis zum Erreichen der Prozesstemperatur im Bereich von 630°C bis 730 °C mit Erdgas betrieben werden. Die drei Brennerzugänge **106A, 106B** und **106C** sind über den Umfang des Stahlbehälters **108** im Abstand von jeweils 120° angeordnet. In der hier gezeigten Ausführungsform bestehen die die Brennerzugänge **106A, 106B** und **106C** nur aus feuerfesten Materialien **118** und enthalten keine Stahlrohre.

### Liste der Bezugszeichen

- 100: Wirbelschichtofen
- 101: Einlass für Materialzufuhr
- 102: Prozessluftzufuhr
- 103: Abluftauslass
- 104: Luftverteiler
- 105: Luftdüsen
- 106A, B, C: Brenner
- 107A, B, C: Schauglas für Brenner
- 108: Stahlbehälter
- 109: Zündbrenner-Anschluss
- 110, 111: Materialauslass
- 112: unterer Druckmesser für Füllstandsmesseinrichtung
- 113: oberer Druckmesser für Füllstandsmesseinrichtung
- 114, 115, 116: Temperaturmesser im Materialbett
- 117: Temperaturmesser über dem Materialbett
- 118: feuerfeste Auskleidung bzw. Beschichtung
- 119: Drucksensor
- 120, 121, 122: Reservestutzen
- 123: Schauglas mit Spülanschluss

## Patentansprüche

1. Verfahren zur Wiederaufbereitung von wertmetallhaltigen Abfallstoffen in einem Wirbelschichtofen (100), umfassend die Phasen:
I. Anfahren des Wirbelschichtofens (100); und
II. Kontinuierliche Wiederaufbereitung der Abfallstoffe,
**dadurch gekennzeichnet, dass** der Wirbelschichtofen (100) während der Phase II der kontinuierlichen Wiederaufbereitung der wertmetallhaltigen Abfallstoffe autotherm betrieben wird, wobei der Wirbelschichtofen
- einen Stahlbehälter (108) mit einer feuerfesten Auskleidung (118),
- einen Einlass (101) für wertmetallhaltige Abfallstoffe,
- mindestens einen Auslass für den Materialaustrag (110, 111) enthaltend Klappen
- mindestens einen Einlass für die Zuführung von Prozessluft (102) und,
- eine Vorwärmeinrichtung zum Vorwärmen der Prozessluft,
- eine Füllstandsmesseinrichtung, vorzugsweise beruhend auf einer Differenzdruckmessung zwischen zwei Messpunkten (112, 113), wovon ein Messpunkt (113) oberhalb und ein Messpunkt (112) unterhalb des Materialbetts angeordnet ist,
- mindestens einen Druckmesser (119) für die Druckmessung im Innenraum des Stahlbehälters (108),
und eine Steuereinrichtung aufweist, die dazu eingerichtet ist die Füllstandsmesseinrichtung derart zu steuern, dass mittels der Differenzdruckmessung mit den Drucksensoren (112, 113) und unter Berücksichtigung der Prozesstemperaturen von 630°C bis 730°C in der kontinuierlichen Phase II der Füllstand des Stahlbehälters (108) im Bereich von 15% bis 25 % gehalten wird, wobei
- über das Ansteuern der Klappe in dem mindestens einen Auslass (110, 111) der Materialaustrag durch Schwerkraft erfolgt;
- und/oder die Prozesstemperatur im Bereich von 630°C bis 730°C gehalten wird, wobei mittels der Vorwärmeinrichtung die Prozessluft auf eine Temperatur im Bereich von 45°C - 130°C vorgewärmt wird;
- und/oder der Druck im Innenraum des Stahlbehälters (108) durch Steuerung einer Absaugeinrichtung der Abgase im Bereich zwischen -0,2 bis -0,3 mBar eingestellt wird.

2. Verfahren nach Anspruch 1, **dadurch gekennzeichnet, dass** der Wirbelschichtofen (100) in der kontinuierlichen, autothermen Phase II mit einer Materialdurchflussrate von etwa 1.000 kg/h betrieben wird.

3. Verfahren nach einem der vorherigen Ansprüche, **dadurch gekennzeichnet, dass** dem Wirbelschichtofen (100) in der kontinuierlichen, autothermen Phase II etwa 3.000 bis 5.000 kg/h Prozessluft zugeführt werden, die vorzugsweise auf eine Temperatur im Bereich von 45°C bis 130°C vorgewärmt wird.

4. Verfahren nach einem der vorherigen Ansprüche, **dadurch gekennzeichnet, dass** die Verweilzeit der wertmetallhaltigen Abfallstoffe in dem Wirbelschichtofen (100) in der kontinuierlichen, autothermen Phase II etwa 4 h beträgt.

5. Verfahren nach einem der vorherigen Ansprüche, **dadurch gekennzeichnet, dass** der Wirbelschichtofen (100) in der kontinuierlichen, autothermen Phase II mit Unterdruck, vorzugsweise mit einem Druck im Bereich von -0,2 bis -0,3 mbar betrieben wird.

6. Verfahren nach einem der vorherigen Ansprüche, wobei die Phase I des Anfahrens des Wirbelschichtofens (100) die Schritte umfasst:
i) Einbringen von bereits wiederaufgearbeitetem Material in den Wirbelschichtofen unter gleichzeitigem Einblasen von Prozessluft in den Wirbelschichtofen und Verwirbeln des Materials,
ii) Erhitzen des Wirbelschichtofens auf die Prozesstemperatur mit mindestens einem, vorzugsweise zwei, besonders bevorzugt drei Gasbrennern,
iii) Zuführung von wertmetallhaltigen Abfallstoffen,
iv) Zünden der Reaktion mit einem Zündbrenner,
v) Abschalten aller Brenner, wenn die Prozesstemperatur von 630°C bis 730°C erreicht ist.

7. Verfahren nach einem der vorherigen Ansprüche, wobei nach Beendigung der Phase I des Anfahrens des Wirbelschichtofens (100) der Zündbrenner (109) aus dem Prozess genommen wird.

8. Vorrichtung mit einem Wirbelschichtofen (100) zum Recycling von wertmetallhaltigen Abfallstoffen in einem kontinuierlichen autothermen Verfahren, wobei der Wirbelschichtofen (100)
- einen Stahlbehälter (108) mit einer feuerfesten Auskleidung (118),
- einen Einlass (101) für wertmetallhaltige Abfallstoffe,
- mindestens einen Auslass für den Materialaustrag (110, 111), wobei der mindestens eine Auslass (110, 111) für den Materialaustrag des Wirbelschichtofens (100) eine Klappe zur Steuerung der Materialaustragsrate aufweist;
- mindestens einen Einlass für die Zuführung von Prozessluft (102) und,
- eine Vorwärmeinrichtung zum Vorwärmen der Prozessluft auf 45°C - 130°C,
- mindestens einen, vorzugsweise zwei, besonders bevorzugt drei Gasbrenner (106A, 106B, 106C), die nur zum Erhitzen des Wirbelschichtofens (100) beim Anfahren auf eine Prozesstemperatur von 720°C bis 730°C betrieben werden,
- eine Füllstandsmesseinrichtung, vorzugsweise beruhend auf einer Differenzdruckmessung zwischen zwei Messpunkten (112, 113), wovon ein Messpunkt (113) oberhalb und ein Messpunkt (112) unterhalb des Materialbetts angeordnet ist,
- mindestens einen Druckmesser (119) für die Druckmessung im Innenraum des Stahlbehälters (108),
- mindestens einen, vorzugsweise mehrere, besonders bevorzugt sechs Temperatursensoren (114, 115, 116) zur Messung der Prozesstemperatur aufweist, wovon mindestens zwei Temperatursensoren (ausgewählt aus 114, 115 und 116) vertikal über das Materialbett verteilt angeordnet sind, und eine Steuereinrichtung, die dazu eingerichtet ist
o die Füllstandsmesseinrichtung derart zu steuern, dass mittels der Differenzdruckmessung mit den Drucksensoren (112, 113) und unter Berücksichtigung der Prozesstemperaturen von 630°C bis 730°C der Füllstand des Stahlbehälters (108) im Bereich von 15% bis 25 % gehalten wird, wobei über das Ansteuern der Klappe in dem mindestens einen Auslass (110, 111) der Materialaustrag durch Schwerkraft erfolgt;
o und/oder die Prozesstemperatur im Bereich von 630°C bis 730°C zu halten, wobei mittels der Vorwärmeinrichtung die Prozessluft auf eine Temperatur im Bereich von 45°C - 130°C vorgewärmt wird,
o und/oder den Druck im Innenraum des Stahlbehälters durch Steuerung einer Absaugeinrichtung der Abgase im Bereich zwischen -0,2 bis -0,3 mBar einzustellen,
aufweist.

9. Vorrichtung nach Anspruch 8, **dadurch gekennzeichnet, dass** der Wirbelschichtofen (100) weiterhin einen Luftverteiler (104) mit Luftdüsen (105) zur Verteilung der Prozessluft aufweist, die über den mindestens einen Einlass (102) in den Wirbelschichtofen (100) zugeführt wird, wobei der Luftverteiler (104) vorzugsweise im unteren Bereich des Wirbelschichtofens (100) angeordnet ist.

10. Vorrichtung nach einem der Ansprüche 8 bis 9, **dadurch gekennzeichnet, dass** der Wirbelschichtofen (100) weiterhin einen Zündbrenner (109) zum einmaligen Zünden/Starten der kontinuierlichen, autothermen Verfahrensphase II zum Recycling von wertmetallhaltigen Abfallstoffen aufweist, wobei der Zündbrenner (109) vorzugsweise nach dem Zünden aus dem Prozess genommen wird.

11. Vorrichtung nach einem der Ansprüche 8 bis 10, weiterhin aufweisend ein oder mehrere Hilfs- und Zusatzeinrichtungen, die ausgewählt sind aus
- einer Differentialdosierwaage im Materialzufuhrbereich, die vorzugsweise gekoppelt ist mit der Füllstandsmesseinrichtung und der Temperaturmessung der Prozesstemperatur,
- einem Mittel zum Weitertransport des ausgetragenen behandelten Materials, beispielsweise umfassend eine Kühlförderschnecke, eine pneumatische Fördereinrichtung und eine Abfüllvorrichtung für Big Bags,
- wahlweise einem Drehrohrofen für die Calcinierung und/oder Weiterverarbeitung des ausgetragenen behandelten Materials,
- einem Abgasreinigungssystem, beispielsweise aufweisend
o mindestens einen Feinfilter für die Abtrennung von Materialstaub und deren Abführung in den Produktstrom,
o mehrere Waschstufen zur Entschwefelung des Abgasstroms, beispielsweise eine Waschstufe mit Wasser und zwei Waschstufen mit Kalkmilch,
o wahlweise eine zusätzliche Stufe zum Waschen des Abgasstroms mit verdünnter Natronlauge,
- einer oder mehreren Explosionsklappen im Abgassystem zum Schutz vor Überdruck, und
- einem Wärmetauscher zum Abkühlen der Abluft im Abgasstrom und zum gleichzeitigen Vorheizen der Prozessluft auf 45 bis 130 °C.

## Claims

1. Method of reprocessing waste materials containing metals of value in a fluidized bed furnace (100), comprising the phases of:
I. Starting up the fluidized bed furnace (100); and
II. Continuously reprocessing the waste materials,
**characterized in that** the fluidized bed furnace (100) is operated autothermally during phase II of continuously reprocessing the waste materials containing metals of value, wherein the fluidized bed furnace comprises
- a steel vessel (108) having a refractory lining (118),
- an inlet (101) for waste materials containing metals of value,
- at least one outlet for material discharge (110, 111), containing valves,
- at least one inlet for the supply of process air (102) and
- a preheating device for preheating the process air,
- a fill level measuring device, preferably based on a measurement of a pressure differential between two measurement points (112, 113), of which one measurement point (113) is disposed above and one measurement point (112) below the material bed,
- at least one manometer (119) for measurement of pressure in the interior of the steel vessel (108),
and a controller set up to control the fill level measuring device in such a way that, by means of the measurement of pressure differential with the pressure sensors (112, 113), and taking account of the process temperatures of 630°C to 730°C in the continuous phase II, the fill level of the steel vessel (108) is kept within a range from 15% to 25%, wherein
- the material discharge is effected by gravity via the actuation of the valve in the at least one outlet (110, 111) ;
- and/or the process temperature is kept within the range from 630°C to 730°C, wherein the process air is preheated to a temperature in the range of 45°C-130°C by means of the preheating device;
- and/or the pressure in the interior of the steel vessel (108) is adjusted within the range between -0.2 and -0.3 mbar by control of an offgas suction device.

2. Method according to Claim 1, **characterized in that** the fluidized bed furnace (100) in the continuous, autothermal phase II is operated at a material flow rate of about 1000 kg/h.

3. Method according to either of the preceding claims, **characterized in that** the fluidized bed furnace (100) in the continuous, autothermal phase II is supplied about 3000 to 5000 kg/h of process air, preferably preheated to a temperature in the range from 45°C to 130°C.

4. Method according to any of the preceding claims, **characterized in that** the dwell time of the waste materials containing metals of value in the fluidized bed furnace (100) in the continuous, autothermal phase II is about 4 h.

5. Method according to any of the preceding claims, **characterized in that** the fluidized bed furnace (100) in the continuous, autothermal phase II is operated with reduced pressure, preferably at a pressure in the range from -0.2 to - 0.3 mbar.

6. Method according to any of the preceding claims, wherein phase I of the startup of the fluidized bed furnace (100) comprises the steps of:
i) introducing already reprocessed material into the fluidized bed furnace with simultaneous blowing of process air into the fluidized bed furnace and fluidizing of the material,
ii) heating the fluidized bed furnace to the process temperature with at least one, preferably two, more preferably three, gas burner(s),
iii) feeding in waste materials containing metals of value,
iv) triggering the reaction with an ignition burner,
v) switching off all burners once the process temperature has reached 630°C to 730°C.

7. Method according to any of the preceding claims, wherein, after phase I of startup of the fluidized bed furnace (100) has ended, the ignition burner (109) is removed from the process.

8. Apparatus having a fluidized bed furnace (100) for recycling of waste materials containing metals of value in a continuous autothermal method, wherein the fluidized bed furnace (100) comprises
- a steel vessel (108) having a refractory lining (118),
- an inlet (101) for waste materials containing metals of value,
- at least one outlet for material discharge (110, 111), wherein the at least one outlet (110, 111) for the discharge of material from the fluidized bed furnace (100) has a valve for control of the material discharge rate;
- at least one inlet for the supply of process air (102) and
- a preheating device for preheating of the process air to 45°C-130°C,
- at least one, preferably two, more preferably three, gas burner(s) (106A, 106B, 106C) that are operated solely for heating of the fluidized bed furnace (100) on startup to a process temperature of 720°C to 730°C,
- a fill level measuring device, preferably based on a measurement of differential pressure between two measurement points (112, 113), of which one measurement point (113) is disposed above and one measurement point (112) below the material bed,
- at least one manometer (119) for measurement of pressure in the interior of the steel vessel (108),
- at least one, preferably more than one, more preferably six, temperature sensors (114, 115, 116) for measurement of the process temperature, of which at least two temperature sensors (selected from 114, 115 and 116) are arranged in vertical distribution through the material bed, and a controller set up to
o control the fill level measuring device in such a way that, by means of the measurement of pressure differential with the pressure sensors (112, 113), and taking account of the process temperatures of 630°C to 730°C, the fill level of the steel vessel (108) is kept in the range from 15% to 25%, wherein the material discharge is effected by gravity via the actuation of the valve in the at least one outlet (110, 111);
o and/or to keep the process temperature within the range from 630°C to 730°C, wherein the process air is preheated to a temperature in the range of 45°C-130°C by means of the preheating device;
o and/or to adjust the pressure in the interior of the steel vessel within the range between -0.2 and -0.3 mbar by control of an offgas suction device.

9. Apparatus according to Claim 8, **characterized in that** the fluidized bed furnace (100) also has an air distributor (104) having air nozzles (105) for distribution of the process air which is supplied to the fluidized bed furnace (100) via the at least one inlet (102), wherein the air distributor (104) is preferably disposed in the lower region of the fluidized bed furnace (100).

10. Apparatus according to either of Claims 8 and 9, **characterized in that** the fluidized bed furnace (100) also has an ignition burner (109) for a single instance of ignition/starting of the continuous, autothermal process phase II for recycling of waste materials containing metals of value, wherein the ignition burner (109) is preferably removed from the process after the ignition.

11. Apparatus according to any of Claims 8 to 10, further comprising one or more auxiliary and additional devices selected from
- a differential metering balance in the material feed region, preferably coupled to the fill level measuring device and the temperature measurement of the process temperature,
- a means of further transporting the treated material discharged, for example comprising a cooling conveying screw, a pneumatic conveying device and a dispensing device for big bags,
- optionally a rotary furnace for the calcination and/or further processing of the treated material discharged,
- an offgas cleaning system comprising, for example,
o at least one fine filter for the removal of material dust and the discharge thereof into the product stream,
o multiple scrubbing stages for desulfurization of the offgas stream, for example a scrubbing stage with water and two scrubbing stages with milk of lime,
o optionally an additional stage for washing of the offgas stream with dilute sodium hydroxide solution,
- one or more explosion valves in the offgas system for protection from excess pressure, and
- a heat exchanger for cooling of the waste air in the offgas stream and for simultaneous preheating of the process air to 45 to 130°C.

## Revendications

1. Procédé de recyclage de déchets contenant des métaux précieux dans un four à lit fluidisé (100), ledit procédé comprenant les phases suivantes :
I. démarrer le four à lit fluidisé (100) ; et
II.recycler les déchets en continu,
**caractérisé en ce que** le four à lit fluidisé (100) est utilisé de manière autothermique pendant la phase II du recyclage en continu des déchets contenant des métaux précieux, le four à lit fluidisé comportant
- un récipient en acier (108) pourvu d'une garniture réfractaire (118),
- une entrée (101) destinée à des déchets contenant des métaux précieux,
- au moins une sortie destinée à l'évacuation de matériau (110, 111) et contenant des volets,
- au moins une entrée d'alimentation en air de processus (102) et
- une unité de préchauffage destinée à préchauffer l'air de processus,
- une unité de mesure de niveau de remplissage, de préférence basée sur une mesure de pression différentielle entre deux points de mesure (112, 113), un point de mesure (113) étant disposé au-dessus du lit de matériau et un point de mesure (112) étant disposé au-dessous de celui-ci,
- au moins un manomètre (119) destiné à mesurer la pression dans l'espace intérieur du récipient en acier (108),
et une unité de commande qui est conçue pour commander l'unité de mesure de niveau de remplissage de manière que le niveau de remplissage du récipient en acier (108) soit maintenu dans la gamme de 15 % à 25 % au moyen de la mesure de pression différentielle avec les capteurs de pression (112, 113) et avec prise en compte des températures de processus de 630 °C à 730 °C dans la phase continue II,
- l'évacuation de matériau étant effectuée par gravité par commande du volet situé dans l'au moins une sortie (110, 111) ;
- et/ou la température de processus étant maintenue dans la gamme de 630 °C à 730 °C, l'air de processus étant préchauffé à une température dans la gamme de 45 °C à 130 °C au moyen de l'unité de préchauffage ;
- et/ou la pression dans l'espace intérieur du réservoir en acier (108) étant réglée dans la gamme de -0,2 à -0,3 mbar par commande d'une unité d'aspiration d'effluents gazeux.

2. Procédé selon la revendication 1, **caractérisé en ce que** le four à lit fluidisé (100) est utilisé dans la phase continue autothermique II avec un débit de matériau d'environ 1000 kg/h.

3. Procédé selon l'une des revendications précédentes, **caractérisé en ce que** le four à lit fluidisé (100) est alimenté, dans la phase continue autothermique II, avec un débit d'environ 3000 à 5000 kg/h, en air de processus qui est préchauffé de préférence à une température dans la gamme de 45 °C à 130 °C.

4. Procédé selon l'une des revendications précédentes, **caractérisé en ce que** le temps de séjour des déchets contenant des métaux précieux dans le four à lit fluidisé (100) dans la phase continue autothermique II est d'environ 4 heures.

5. Procédé selon l'une des revendications précédentes, **caractérisé en ce que** le four à lit fluidisé (100) est utilisé dans la phase continue autothermique II avec une dépression, de préférence avec une pression dans la gamme de -0,2 à -0,3 mbar.

6. Procédé selon l'une des revendications précédentes, la phase I du démarrage du four à lit fluidisé (100) comprenant les étapes suivantes :
i) introduire du matériau qui a déjà été recyclé dans le four à lit fluidisé et en même temps insuffler de l'air de processus dans le four à lit fluidisé et faire tourbillonner le matériau,
ii) chauffer le four à lit fluidisé à la température de processus à l'aide d'au moins un brûleur à gaz, de préférence deux brûleurs à gaz, de manière particulièrement préférée trois brûleurs à gaz,
iii) fournir des déchets contenant des métaux précieux,
iv) amorcer la réaction avec un brûleur d'allumage,
v) arrêter tous les brûleurs lorsque la température de processus de 630 °C à 730 °C est atteinte.

7. Procédé selon l'une des revendications précédentes, le brûleur d'allumage (109) étant retiré du processus une fois la phase I de démarrage du four à lit fluidisé (100) terminée.

8. Dispositif comprenant un four à lit fluidisé (100) destiné au recyclage de déchets contenant des métaux précieux dans un procédé autothermique continu, le four à lit fluidisé (100) comportant
- un récipient en acier (108) pourvu d'une garniture réfractaire (118),
- une entrée (101) destinée à des déchets contenant des métaux précieux,
- au moins une sortie destinée à l'évacuation de matériau (110, 111), l'au moins une sortie (110, 111) destinée à l'évacuation de matériau du four à it fluidisé (100) comportant un volet destiné à commander le débit d'évacuation de matériau ;
- au moins une entrée d'alimentation en air de processus (102) et
- une unité de préchauffage destinée à préchauffer l'air de processus à une température de 45 °C à 130 °C,
- au moins un brûleur à gaz, de préférence deux brûleurs à gaz, de manière particulièrement préférée trois brûleurs à gaz (106A, 106B, 106C) qui sont utilisés seulement pour chauffer le four à lit fluidisé (100) lors du démarrage à une température de processus de 720 °C à 730 °C,
- une unité de mesure de niveau de remplissage, de préférence basée sur une mesure de pression différentielle entre deux points de mesure (112, 113), un point de mesure (113) étant disposé au-dessus du lit de matériau et un point de mesure (112) étant disposé au-dessous de celui-ci,
- au moins un manomètre (119) destiné à mesurer la pression dans l'espace intérieur du récipient en acier (108),
- au moins un capteur de température, de préférence plusieurs capteurs de température, de manière particulièrement préférée six capteurs de température (114, 115, 116) destinés à mesurer la température de processus, au moins deux capteurs de température (choisis parmi 114, 115 et 116) étant disposés de manière répartie verticalement au-dessus du lit de matériau, et une unité de commande qui est conçue pour
O commander l'unité de mesure de niveau de remplissage de manière que le niveau de remplissage du réservoir en acier (108) soit maintenu dans la gamme de 15 % à 25 % au moyen de la mesure de pression différentielle à l'aide des capteurs de pression (112, 113) et avec prise en compte des températures de processus de 630 °C à 730 °C, l'évacuation de matériau étant effectuée par gravité par commande du volet dans l'au moins une sortie (110, 111) ;
O et/ou maintenir la température de processus dans la gamme de 630 °C à 730 °C,
l'air de processus étant préchauffé à une température dans la gamme de 45 °C à 130 °C au moyen de l'unité de préchauffage,
o et/ou régler la pression dans l'espace intérieur du récipient en acier dans la gamme de -0,2 à -0,3 mbar par commande d'une unité d'aspiration d'effluents gazeux.

9. Dispositif selon la revendication 8, **caractérisé en ce que** le four à lit fluidisé (100) comporte en outre un distributeur d'air (104) pourvu de buses d'air (105) destinées à distribuer l'air de processus qui est amené dans le four à lit fluidisé (100) par le biais de l'au moins une entrée (102), le distributeur d'air (104) étant de préférence disposé dans la zone inférieure du four à lit fluidisé (100).

10. Dispositif selon l'une des revendications 8 à 9, **caractérisé en ce que** le four à lit fluidisé (100) comporte en outre un brûleur d'allumage (109) destiné à l'allumage/au démarrage ponctuel de la phase de procédé II autothermique continu de recyclage de déchets contenant des métaux précieux, le brûleur d'allumage (109) étant de préférence retiré du processus après l'allumage.

11. Dispositif selon l'une des revendications 8 à 10, comprenant en outre une ou plusieurs unités auxiliaires et additionnelles qui sont choisies parmi
- une balance de dosage différentiel qui est située dans la zone d'alimentation en matériau et qui est de préférence couplée à l'unité de mesure de niveau de remplissage et à la mesure de la température de processus,
- un moyen d'enlèvement du matériau traité évacué, comprenant par exemple une vis sans fin de refroidissement, une unité de transport pneumatique et un dispositif de remplissage de grands sacs,
- éventuellement un four rotatif destiné à la calcination et/ou au traitement ultérieur du matériau traité évacué,
- un système d'épuration d'effluents gazeux, comportant par exemple
O au moins un filtre fin destiné à séparer les poussières de matériau et les emporter dans le flux de produit,
O plusieurs étages de lavage destinés à la désulfuration du flux d'effluents gazeux, par exemple un étage de lavage à l'eau et deux étages de lavage au lait de chaux,
O éventuellement un étage supplémentaire de lavage du flux d'effluents gazeux avec de la soude caustique diluée,
- un ou plusieurs volets antidéflagrants dans le système d'effluents gazeux pour effectuer une protection contre la surpression, et
- un échangeur de chaleur destiné à refroidir l'air évacué dans le flux d'effluents gazeux et à préchauffer en même temps l'air de processus à une température de 45 à 130 °C.
